(19) Europäisches Patentamt
European Patent Office
Office européen des brevets

(11) **EP 4 443 048 A1**

(12) **DEMANDE DE BREVET EUROPEEN**

(43) Date de publication:
**09.10.2024 Bulletin 2024/41**

(21) Numéro de dépôt: **24168574.2**

(22) Date de dépôt: **04.04.2024**

(51) Classification Internationale des Brevets (IPC):
*F21V 8/00* (2006.01)   *G02B 5/18* (2006.01)
*G02F 1/29* (2006.01)   *G02B 27/00* (2006.01)
*G02B 27/01* (2006.01)

(52) Classification Coopérative des Brevets (CPC):
**G02B 6/0035; G02B 5/1819; G02B 6/005;
G02B 27/0081; G02B 27/0172; G02F 1/292;**
G02B 2027/0105; G02B 2027/0123;
G02B 2027/0174; G02B 2027/0178

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **07.04.2023 FR 2303528**

(71) Demandeur: **Le Commissariat à l'énergie
atomique et aux
énergies alternatives
75015 Paris (FR)**

(72) Inventeurs:
• **MARTINEZ, Christophe
38054 GRENOBLE CEDEX 09 (FR)**
• **RAINOUARD, Fabian
38054 GRENOBLE CEDEX 09 (FR)**

(74) Mandataire: **Atout PI Laplace
Immeuble Up On
25 Boulevard Romain Rolland
CS 40072
75685 Paris Cedex 14 (FR)**

(54) **DISPOSITIF DE PROJECTION À RÉPARTITION DE POINTS D'ÉMISSION OPTIMISÉE SUR UNE SURFACE D'ÉMISSION DISCRÉTISÉE**

(57) Il est proposé un dispositif (10) de projection d'une image sur un oeil, comprenant une surface d'émission S comprenant un ensemble de guides d'ondes, un ensemble de réseaux de diffraction et un ensemble d'électrodes. Chaque réseau est positionné à l'intersection d'un des guides et d'une des électrodes pour former un point d'émission d'une onde lumineuse. La surface S est discrétisée en une pluralité de zones d'émission élémentaires selon un maillage continue. Chaque zone comprend un sous-ensemble de points réparti selon un nombre $n_x^{ij} \times n_y^{ij}$ de distributions de points d'émission. Les points d'une même distribution sont configurés pour émettre une onde résultante dirigée selon un vecteur d'onde contenu dans un domaine angulaire défini à partir du nombre de zones discrétisant la surface S et de la position de la zone sur la surface S. Le nombre de distributions correspondant au nombre de pixels de l'image à projeter dans ledit domaine angulaire.

**(Cont. page suivante)**

**Fig. 3**

**Description**

**Domaine technique**

La présente invention concerne de manière générale la projection d'une image sur un oeil, dans des applications de type réalité augmentée, et en particulier un dispositif de projection à répartition de points d'émission optimisée sur une surface d'émission discrétisée et à partir de configuration d'isolignes, ainsi qu'un procédé pour la fabrication d'un tel dispositif.

Un système optique portable d'affichage de données en réalité augmentée superpose, à la vision du monde réel d'un utilisateur du système, une image contenant des informations destinées à l'utilisateur, telles que par exemple des informations sur son environnement, sa position, sa vitesse de déplacement, etc.

Certains systèmes optiques portables d'affichage de données en réalité augmentée connus utilisent un dispositif de projection d'image comportant un circuit optique intégré transparent composé d'un réseau de guides de lumière nanométriques, d'un réseau d'électrodes et d'un film holographique, comme décrit par exemple dans les demandes de brevet FR3122929A1 et FR3022642A1. Un tel dispositif de projection d'image est implémenté sans écran ni système optique, ce qui permet d'obtenir un système optique compact, et un champ de vision étendu pour l'utilisateur. Les intersections du circuit de guides de lumière nanométriques avec le réseau d'électrodes permettent de définir un ensemble de points d'émission susceptibles d'émettre une onde lumineuse dirigée vers la pupille de l'œil de l'utilisateur. L'ensemble de points d'émission est subdivisé en différents sous-ensembles, chaque sous-ensemble comportant des points d'émission répartis, le plus aléatoirement possible. Les ondes lumineuses associées à un même sous-ensemble de points d'émission se propagent selon une même direction pour former un point lumineux unique au niveau de la rétine de l'œil de l'utilisateur. Un point lumineux correspond à un pixel d'une image à projeter.

Cependant, un tel dispositif présente l'inconvénient d'utiliser des répartitions de points d'émission définis selon certaines périodicités spatiales générant des effets de diffraction lors de la formation de l'image sur la rétine. Par ailleurs, il présente également une densité limitée des points d'émission de chaque sous-ensemble subdivisé pour former chaque point lumineux. Il en résulte un halo lumineux associé à la projection rétinienne qui dégrade le contraste de l'image à afficher. Par suite, la qualité de projection d'images sur la rétine d'un utilisateur est insuffisante.

Il existe ainsi un besoin pour un dispositif de projection d'image amélioré permettant d'augmenter la densité de points d'émission d'un sous-ensemble subdivisé tout en améliorant la répartition pseudo-aléatoire et apériodique des points d'émission.

**Résumé de l'invention**

La présente invention vient améliorer la situation en proposant un dispositif de projection d'image sur un oeil. Le dispositif est défini dans un repère orthogonal (X,Y,Z) et comprend une surface d'émission S s'étendant généralement dans le plan (X,Y) du repère orthogonal (X,Y,Z). La surface d'émission S comprend un empilement d'éléments. les éléments comprennent un ensemble de $M_x$ guides d'ondes $g_p$, un ensemble de $M_x \times M_y$ réseaux de diffraction $r_{pq}$ et un ensemble de $M_y$ électrodes $e_q$, $M_x$ et $M_y$ étant des entiers positifs dont le produit $M_x \times M_y$ est strictement supérieur à 1. Chaque réseau de diffraction $r_{ap}$ est positionné au niveau de l'intersection d'un des guides d'ondes $g_p$ et d'une des électrodes $e_p$ de manière à former un point d'émission $EP_{pq}$ d'une onde lumineuse.

La surface d'émission S est discrétisée en une pluralité de $L_x \times L_y$ zones d'émission élémentaires $\mathcal{Z}^{ij}$ selon un maillage continue dans le plan (X,Y), chaque zone d'émission élémentaire $\mathcal{Z}^{ij}$ comprenant un sous-ensemble de $m_x^{ij} \times m_y^{ij}$ points d'émission $EP_{pq}^{ij}$ parmi les $M_x \times M_y$ points d'émission $EP_{pq}$ de la surface d'émission S, le sous-ensemble de $m_x^{ij} \times m_y^{ij}$ points d'émission $EP_{pq}^{ij}$ étant réparti selon un nombre $n_x^{ij} \times n_y^{ij}$ de distributions de points d'émission $EPD_{uv}^{ij}$. Les points d'émission $EP_{pq}^{ij}$ d'une même distribution de points d'émission $EPD_{uv}^{ij}$ de la zone d'émission élémentaire $\mathcal{Z}^{ij}$ sont configurés pour émettre une onde lumineuse résultante dirigée selon un vecteur d'onde $\vec{k}_{uv}^{ij}$ contenu dans un domaine angulaire défini à partir du nombre $L_x \times L_y$ de zones d'émission

élémentaires $\mathcal{Z}^{ij}$ discrétisant la surface d'émission S et de la position de la zone d'émission élémentaire $\mathcal{Z}^{ij}$ sur la

surface d'émission S. Le nombre $n_x^{ij} \times n_y^{ij}$ de distributions de points d'émission $EPD_{uv}^{ij}$ correspondant au nombre

$n_x^{ij} \times n_y^{ij}$ de pixels de l'image à projeter dans le domaine angulaire.

Dans des modes de réalisation, la discrétisation de la surface d'émission S peut être uniforme dans le plan (X,Y).

Alternativement, la discrétisation de la surface d'émission S peut être nonuniforme dans le plan (X,Y).

Selon certains modes de réalisation, pour chaque zone d'émission élémentaires $\mathcal{Z}^{ij}$, la répartition des points d'émission $EP_{pq}^{ij}$ dans une distribution de points d'émission $EPD_{uv}^{ij}$ peut être déterminée de façon aléatoire ou pseudo-aléatoire.

Avantageusement, l'empilement de la surface d'émission S peut comprendre en outre un ensemble de $M_x \times M_y$ hologrammes $h_{pq}$, chaque hologramme $h_{pq}$ étant positionné au niveau de l'intersection entre un des guides d'ondes $g_p$ et une des électrodes $e_p$ pour former le point d'émission $EP_{pq}$. Les hologrammes $h_{pq}$ associés aux points d'émission

$EP_{pq}^{ij}$ d'une même distribution de points d'émission $EPD_{uv}^{ij}$ de la zone d'émission élémentaire $\mathcal{Z}^{ij}$ peuvent être

encodés de sorte que les points d'émission $EP_{pq}^{ij}$ émettent des ondes lumineuses accordées entre elles en angle et en phase pour générer l'onde lumineuse résultante définie selon la direction du vecteur d'onde $\vec{k}_{uv}^{ij}$ contenu dans un domaine angulaire.

Le dispositif peut comprendre en outre, dans le plan (X,Y), au moins une autre surface d'émission $S^{xy}$ distincte de la surface d'émission S. L'autre surface d'émission $S^{xy}$ peut être discrétisée en zones d'émission élémentaires comprenant des points d'émission adaptés pour émettre une onde lumineuse selon une direction contenue dans un domaine angulaire déterminé selon un axe optique centré par rapport à un point $Pr^{xy}$ et dirigé vers la surface d'émission $S^{xy}$, le point $Pr^{xy}$ étant associé à la position de l'œil, après rotation de l'œil dans son orbite vers la surface d'émission $S^{xy}$.

Le dispositif peut comprendre en outre, dans le plan (X,Y), au moins une autre surface d'émission S identique à la surface d'émission S. L'autre surface d'émission S peut être discrétisée en zones d'émission élémentaires comprenant des points d'émission configurés pour émettre une onde lumineuse selon une direction contenue dans un domaine angulaire défini selon l'axe Z et centré par rapport à un point $Pt^{xy}$ associé à la translation de l'œil dans le plan (X,Y).

Avantageusement, les zones d'émission élémentaires $\mathcal{Z}^{ij}$ peuvent avoir une taille dans le plan (X,Y) comprise entre 200 $\mu$m et 800 $\mu$m.

Un autre objet de l'invention est un système optique portable d'affichage de données transparent comprenant un dispositif de projection d'une image. Le système est un système de lunettes ou un casque à réalité augmentée.

L'invention fournit également un procédé pour la fabrication du dispositif de projection d'une image. Le procédé comprend une phase de conception du dispositif et une phase de fabrication matérielle du dispositif ainsi conçu. La phase de conception comprend les étapes consistant à :

- discrétiser la surface d'émission S en $L_x \times L_y$ de zones d'émission élémentaires $\mathcal{Z}^{ij}$, chaque zone d'émission

élémentaire $\mathcal{Z}^{ij}$ comprenant un sous-ensemble de $m_x^{ij} \times m_y^{ij}$ de points d'émission $EP_{pq}^{ij}$ ;

- répartir le sous-ensemble de $m_x^{ij} \times m_y^{ij}$ de points d'émission $EP_{pq}^{ij}$ selon $n_x^{ij} \times n_y^{ij}$ distributions de points d'émission $EPD_{uv}^{ij}$ ;

- pour chaque zone d'émission élémentaire $\mathcal{Z}^{ij}$, affecter $n_x^{ij} \times n_y^{ij}$ distributions de points d'émission $EPD_{uv}^{ij}$ à $n_x^{ij} \times n_y^{ij}$ pixels de l'image à projeter ;

- déterminer, pour chaque distribution de points d'émission $EPD_{uv}^{ij}$, la direction du vecteur d'onde $\vec{k}_{uv}^{ij}$ de l'onde lumineuse émise par les points d'émission $EP_{pq}^{ij}$, le vecteur d'onde $\vec{k}_{uv}^{ij}$ étant contenu dans un domaine angulaire défini à partir du nombre $L_x \times L_y$ de zones d'émission élémentaires $\mathcal{Z}^{ij}$ discrétisant la surface d'émission S et de la position de la zone d'émission élémentaire $\mathcal{Z}^{ij}$ sur la surface d'émission S.

Le dispositif de projection d'image selon les modes de réalisation de l'invention permet d'améliorer la qualité, en particulier le contraste, de projection des images sur la rétine d'un utilisateur, à partir d'une répartition apériodique de points d'émission optimisée sur une surface d'émission discrétisée, d'une augmentation de la densification des points d'émission sur une surface d'émission et de configurations d'isolignes.

Un tel dispositif permet en outre de faciliter et d'accélérer le procédé pour la fabrication du dispositif.

## Description des figures

D'autres caractéristiques, détails et avantages de l'invention ressortiront à la lecture de la description faite en référence aux dessins annexés donnés à titre d'exemple.

[Fig.1a] La figure 1a est un schéma représentant un dispositif de projection d'image, selon des modes de réalisation de l'invention.

[Fig.1b] La figure 1b est un schéma représentant un exemple d'image à projeter sur un oeil d'un utilisateur d'un système optique portable d'affichage de données, selon des modes de réalisation de l'invention.

[Fig.2] La figure 2 est un schéma représentant une coupe transversale de la structure de la surface d'émission d'un dispositif de projection d'image selon le plan (X,Z), selon des modes de réalisation de l'invention.

[Fig.3] La figure 3 est un schéma représentant une discrétisation de la surface d'émission d'un dispositif de projection d'image dans le plan (X,Y), selon des modes de réalisation de l'invention.

[Fig.4] La figure 4 est un schéma représentant une zone d'émission élémentaire de la surface d'émission discrétisée d'un dispositif de projection d'image dans le plan (X,Y), selon des modes de réalisation de l'invention.

[Fig.5] La figure 5 est un schéma représentant une projection dans le plan (X,Y) du domaine angulaire de projection associé à une zone d'émission élémentaire de la surface d'émission discrétisée d'un dispositif de projection d'image, selon des modes de réalisation de l'invention.

[Fig.6] La figure 6 est un schéma représentant un ensemble de zones d'éclairement sur une pupille associé aux zones d'émission élémentaires de la surface d'émission discrétisée d'un dispositif de projection d'image, selon des modes de réalisation de l'invention.

[Fig.7a] et [Fig.7b] Les figures 7a et 7b sont des schémas représentant des surfaces d'émission reproduites dans le plan (X,Y) sur un dispositif de projection d'image, selon des modes de réalisation de l'invention.

[Fig.8a] La figure 8a est un graphique représentant une distribution spatiale de l'intensité la réponse percussionnelle formée par une distribution de points d'émission d'un dispositif de projection d'image, selon des modes de réalisation de l'invention.

[Fig.8b] La figure 8b est un graphique représentant une évolution d'un ratio de puissance d'une distribution spatiale de l'intensité la réponse percussionnelle en fonction d'une densité des points d'émission d'un dispositif de projection d'image, selon des modes de réalisation de l'invention.

[Fig.9] La figure 9 illustre les résultats de simulations d'une image projetée pour différentes dimensions comparatives d'un dispositif de projection d'image, selon des modes de réalisation de l'invention.

[Fig.10] La figure 10 est un organigramme représentant des étapes d'un procédé pour la fabrication du dispositif de projection d'une image, selon des modes de réalisation de l'invention.

[Fig.11a] et [Fig.11b] Les figures 11a et 11b sont des organigrammes représentant des sous-étapes d'un procédé pour la fabrication du dispositif de projection d'une image, selon des modes de réalisation de l'invention.

[Fig.12] Les figures 12a et 12b sont schéma représentant un système optique d'enregistrement des hologrammes, selon des modes de réalisation de l'invention.

[Fig.13] La figure 13 est schéma représentant les configurations de guides d'ondes et d'électrodes isolignes d'une surface d'émission d'un dispositif de projection d'image, selon des modes de réalisation de l'invention.

[Fig.14] La figure 14 est un organigramme représentant des étapes d'un procédé pour la fabrication du dispositif de projection d'une image, selon des modes de réalisation de l'invention.

[Fig.15] La figure 15 est un organigramme représentant des graphiques associés à des étapes d'un procédé pour la fabrication du dispositif de projection d'une image, selon des modes de réalisation de l'invention.

[Fig.16a] et [Fig.16b] Les figures 16a et 16b représentent des résultats de simulation de la distribution spatiale de l'intensité de la réponse percussionnelle pour des configurations par « translations de segments » et des configurations d'isolignes de surface d'émission d'un dispositif de projection d'image, selon des modes de réalisation de l'invention.

[Fig.17a] et [Fig.17b] Les figures 17a et 17b représentent des résultats d'application de critères de quantification de qualité de projection d'une image pour des configurations par « translations de segments » et des configurations d'isolignes de surface d'émission d'un dispositif de projection d'image, selon des modes de réalisation de l'invention.

[Fig.18] La figure 18 est schéma représentant les configurations de guides d'ondes et d'électrodes isolignes associées à une discrétisation de la surface d'émission d'un dispositif de projection d'image dans le plan (X,Y), selon des modes de réalisation de l'invention.

Des références identiques sont utilisées dans les figures pour désigner des éléments identiques ou analogues. Pour des raisons de clarté, les éléments représentés ne sont pas à l'échelle. Par ailleurs, dans la suite de la description, sauf indication contraire, les termes "sensiblement" et "généralement" signifient "à plus ou moins 10% près".

## Description détaillée

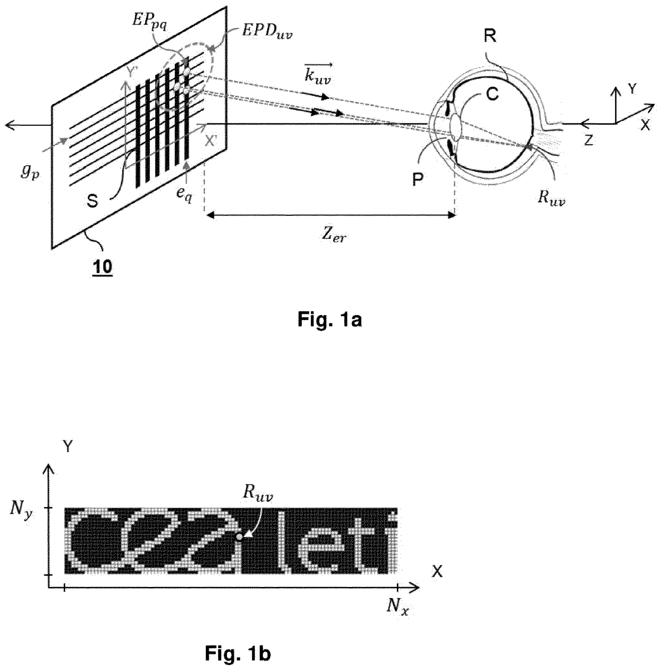

La figure 1a représente schématiquement un dispositif de projection d'image 10 défini dans un repère orthogonal (X,Y,Z) et comprenant un ensemble de guides d'ondes $g_p$ comprenant un nombre $M_x$ de guides d'ondes et un ensemble d'électrodes $e_q$ comprenant $M_y$ électrodes, chaque guides d'ondes $g_p$ étant non parallèle à chacune des électrodes $e_q$, selon des modes de réalisation de l'invention.

Les nombres $M_x$ et $M_y$ sont des entiers positifs dont le produit $(M_x \times M_y)$ est strictement supérieur à 1. Le paramètre $p$ désigne un indice associé aux différentes guides d'ondes $g_p$, avec $p \in [1, Mx]$, et le paramètre $q$ désigne un indice associé aux différentes électrodes $e_q$, avec $q \in [1, M_y]$.

Le dispositif de projection d'image 10 peut être utilisé par exemple dans un système optique portable d'affichage de données, dans le domaine de l'affichage d'images en réalité augmentée (RA) et plus généralement dans le domaine de la réalité virtuelle (RV) et la réalité mixte (RM). La figure 1a correspond à une telle application. Comme représenté sur la figure 1a, le dispositif de projection d'image 10 peut être disposé à une distance $Z_{er}$ de la pupille P d'un oeil d'un utilisateur du système optique portable d'affichage de données. L'axe Z correspond alors à l'axe optique du regard de l'utilisateur du système et est associé à la position de l'œil dans le plan (X,Y) du repère orthogonal (X,Y,Z). Par exemple, la distance $Z_{er}$ (encore appelée 'dégagement oculaire' ou 'Eye Relief' selon l'expression anglo-saxonne correspondante) peut être égale à 20 mm pour un système optique portable d'affichage de données comprenant une paire de lunettes de type lunettes de vue, ou égale à 30 mm pour un système comprenant un casque d'immersion RA ou RV/RM.

Le dispositif de projection d'image 10 comprend une surface d'émission S, s'étendant généralement dans le plan (X,Y) et formée de ($M_x \times M_y$) points d'émission, notés $EP_{pq}$. Chaque point d'émission $EP_{pq}$ correspond à l'intersection d'un guide d'onde $g_p$ et d'une électrode $e_q$. Chaque point d'émission $EP_{pq}$ est adapté pour émettre une onde lumineuse se propageant selon un axe de propagation (ou vecteur d'onde) $\vec{k}$, de la surface d'émission S vers la pupille P qui focalise alors la lumière sur la rétine R de l'œil. La surface d'émission S correspond alors à un écran de projection rétinienne.

Le dispositif de projection d'image 10 est adapté pour projeter une image de taille ($N_x \times N_y$) en nombre de pixels et sensiblement définie dans le plan de projection de la rétine R de l'œil. La figure 1b représente un exemple d'image à projeter sur un oeil d'un utilisateur. Chaque pixel projeté correspond alors à un point $R_{uv}$ illuminé sur la rétine R.

Les nombres $N_x$ et $N_y$ sont des entiers positifs dont le produit ($N_x \times N_y$) est strictement supérieur à 1. Le paramètre u désignant un indice associé aux pixels de l'image sur l'axe X, avec $u$ e [1, $N_x$], et le paramètre $v$ désignant un indice associé aux pixels de l'image selon l'axe Y, avec $v$ e [1, $N_y$]. Par exemple et sans limitation, un nombre minimum du produit des entiers ($N_x \times N_y$) peut être égale à 100 pixels d'une image à projeter.

L'ensemble des ($M_x \times M_y$) points d'émission $EP_{pq}$ est alors réparti en ($N_x \times N_y$) sous-ensembles de points d'émission. Ces sous-ensembles de points d'émission sont également appelés 'distributions de points d'émission' et désignés par la notation $EPD_{uv}$. Il est à noter qu'un nombre minimum du produit des entiers ($M_x \times M_y$) peut être défini à partir de la maximisation du nombre de distributions de points d'émission ($N_x \times N_y$) sur la surface d'émission S (i.e. pixels à projeter) et du nombre $n_{em/EPD}$ de points d'émission $EP_{pq}$ par distribution de points d'émission $EPD_{uv}$. Par exemple et sans limitation, le nombre $n_{em/EPD}$ peut être compris entre 50 et 200, et le nombre minimum du produit des entiers ($M_x \times M_y$) peut donc être égale à 5000 points d'émission $EP_{pq}$.

Chaque distribution de points d'émission $EPD_{uv}$ peut être formée de telle sorte que tous les points d'émission $EP_{pq}$ d'une même distribution émettent tous une onde lumineuse accordée en phase selon un même axe de propagation $\vec{k}_{uv}$. Il est à noter qu'une première onde lumineuse et une deuxième onde lumineuse ayant chacune un même axe de propagation $\vec{k}_{uv}$ sont accordées en phase si dans un plan perpendiculaire à $\vec{k}_{uv}$ la valeur de la phase de la seconde onde lumineuse est sensiblement égale à la valeur de la phase de la première onde lumineuse modulo $2\pi$. Les ondes lumineuses émises par les points d'émission $EP_{pq}$ d'une même distribution peuvent se propager donc de façon parallèle entre le dispositif de projection d'image 10 et la pupille P de l'œil sur la distance $Z_{er}$, et converger sensiblement jusqu'au même point $R_{uv}$ sur la rétine grâce au cristallin C de l'œil comme représenté sur la figure 1a. Dans ce cas, l'œil perçoit l'image projetée en accommodant à l'infini. Suivant une variante non représentée sur les figures, les ondes lumineuses accordées en phase et émises par les points d'émission $EP_{pq}$ d'une même distribution $EPD_{uv}$ peuvent se propager suivant des directions $\vec{k'}_{uv}$ sensiblement divergentes autour d'une direction $\vec{k}_{uv}$ qui cible le point $R_{uv}$ (i.e. pixel d'indices ($u$, v)) dans le champ visuel. Dans ce cas, l'œil perçoit l'image projetée en accommodant à une distance, dite distance d'accommodation et notée $d_a$, qui peut être de quelques mètres (i.e. $d_a$ est non égale à l'infini). Par exemple et sans limitation, la distance d'accommodation $d_a$ peut être de 2 m. Le degré de divergence d'une direction $\vec{k}$ d'un et/ou de plusieurs points d'émission $EP_{pq}$ par rapport à la direction $\vec{k}_{uv}$ peut alors être déterminé à partir de la distance d'accommodation $d_a$. L'intensité lumineuse au niveau du point $R_{uv}$ résulte de la contribution de chaque onde lumineuse des points d'émission $EP_{pq}$. La distribution de points d'émission $EPD_{uv}$ est ajustée en phase et forme une onde lumineuse résultante. L'onde lumineuse résultante issue de $EPD_{uv}$ peut être associée à une onde plane ou à une onde sensiblement sphérique si la distance d'accommodation $d_a$ de l'image projetée sur la rétine n'est pas à l'infini). Avantageusement, la répartition des points d'émission $EP_{pq}$ pour chaque distribution de points d'émission $EPD_{uv}$ peut être déterminée de façon aléatoire ou pseudo-aléatoire.

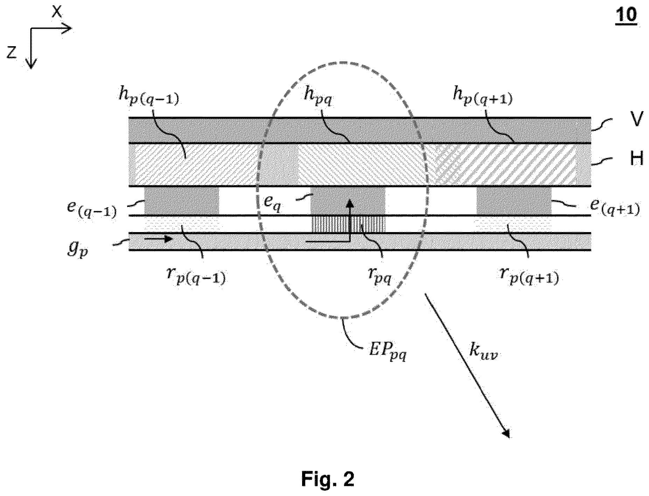

La figure 2 représente schématiquement une coupe transversale de la structure de la surface d'émission S du dispositif de projection d'image 10 selon le plan (X,Z). Cette structure comprend un empilement de plusieurs couches superposées dans la direction de l'axe Z.

Le dispositif 10 comprend une première couche correspondant à l'ensemble des $M_x$ guides d'ondes $g_p$ agencés parallèlement à la surface d'émission S. Chaque guide d'onde $g_p$ s'étend de part et d'autre de la surface d'émission S, à partir d'une position initiale vers une position finale disposées suivant un axe d'extension X' sensiblement parallèle à l'axe longitudinal X. A titre de simplification, sur les figures 1a et 2, les guides d'ondes $g_p$ sont représentés schématiquement dans une forme rectiligne selon l'axe X. Néanmoins, l'homme du métier comprendra aisément que l'invention n'est pas limitée à une telle forme de configuration de guides d'onde.

Les guides d'ondes $g_p$ sont configurés pour recevoir une lumière cohérente, émise par une ou plusieurs sources laser (non représentées sur les figures), et pour propager la lumière cohérente le long de la surface d'émission S. Les guides d'ondes $g_p$ peuvent par exemple être formés de nitrure de silicium, et avoir une largeur ($g_y$), dans la direction de l'axe Y sur la figure 1a, et une épaisseur ($g_z$), dans la direction de l'axe Z, toutes deux comprises entre 100 nm et 600 nm.

Le dispositif comprend également une deuxième couche correspondant à l'ensemble des $M_y$ électrodes $e_q$ agencées parallèlement à la surface d'émission S. Chaque électrode $e_q$ s'étend de part et d'autre de la surface d'émission S, à partir d'une position initiale vers une position finale disposées suivant un axe d'extension Y' sensiblement parallèle à l'axe transversal Y. A titre de simplification, sur la figure 1a, les électrodes $e_q$ sont représentés schématiquement sous forme rectiligne dans la direction de l'axe Y. Néanmoins, l'homme du métier comprendra aisément que l'invention n'est pas limitée à une telle forme de configuration d'électrodes.

Les électrodes $e_q$ sont configurées pour recevoir une tension de polarisation (ou modulation électrique) spécifique, gérée par une ou plusieurs alimentations électriques (non représentées sur les figures), et pour propager la modulation électrique le long de la surface d'émission S. Les électrodes $e_q$ sont constituées d'un matériau conducteur, par exemple pour des électrodes transparentes, ce matériau conducteur peut être l'oxyde d'indium étain. Les électrodes $e_q$ peuvent avoir une largeur ($e_x$), dans la direction de l'axe X sur la figure 1a, comprise entre 2 μm et 10 μm, et une épaisseur ($e_z$), dans la direction de l'axe Z, dépendant du matériau conducteur. Par exemple, l'épaisseur ($e_z$) d'électrodes $e_q$ constituées d'oxyde d'indium étain peut être comprise typiquement entre 20 nm et 100 nm.

L'ensemble de $M_y$ électrodes $e_q$ est superposé à l'ensemble des $M_x$ guides d'ondes $g_p$, parallèlement à la surface d'émission S. Chaque électrode $e_q$ 'croise' ainsi plusieurs guides d'ondes $g_p$, de façon à définir plusieurs intersections (ou croisements). Chaque intersection correspond à une position d'un point d'émission $EP_{pq}$. Tel qu'utilisé ici, le terme 'intersection' fait référence à une superposition d'un guide d'ondes $g_p$ (i.e. première couche) et d'une électrode $e_q$ (i.e. deuxième couche) non parallèles entre elles.

Le dispositif 10 comprend en outre une troisième couche, comprise entre la première et la deuxième couche, correspondant à un ensemble de ($M_x \times M_y$) réseaux de diffraction, notés $r_{pq}$. Chaque réseau de diffraction $r_{qp}$ est couplé optiquement à un guide d'ondes $g_p$ et est assemblé à une électrode $e_p$. Chaque réseau de diffraction $r_{qp}$ est formé à partir d'une variation périodique d'au moins un matériau à indice de réfraction pouvant être modulé en appliquant une tension de polarisation électrique traversant l'électrode $e_p$.

La troisième couche comprenant l'ensemble de réseaux de diffraction $r_{pq}$ peut être constituée d'une structure continue dans le plan (X,Y) de la surface d'émission S. Alternativement, la troisième couche peut également être constituée de structures localisées dans le plan (X,Y) de la surface d'émission S et positionnées sensiblement au niveau des intersections formées par les guide d'ondes $g_p$ et les électrodes $e_q$. La structure continue ou les structures localisées peuvent être formées par exemple d'inclusions, définissant un motif de variation périodique, dans de l'oxyde de silicium. Les inclusions peuvent alors être constituées de tout matériau ayant un indice de réfraction électriquement modulable, comme par exemple un cristal liquide. Lorsque la longueur d'onde de la lumière émise par une source laser est de 532 nm, la période du motif du réseau de diffraction $r_{pq}$ peut être comprise entre 300 nm et 400 nm. Un réseau de diffraction peut être étalé selon une plage de motifs périodiques sur une longueur ($r_x$) et s'étendre sur une largeur ($r_y$). Ces grandeurs ($r_x$) et ($r_y$) peuvent être définies à partir des zones de superposition formées par les guide d'ondes $g_p$ et les électrodes $e_q$. Par exemple, le réseau de diffraction peut être étalé sur 10 motifs périodiques tels que la longueur ($r_x$) peut être supérieure ou sensiblement égale à la largeur ($e_x$) des électrodes $e_p$ induisant la modulation de l'indice de réfraction. La troisième couche comprenant l'ensemble de réseaux de diffraction peut avoir une épaisseur ($r_z$) comprise par exemple entre 100 nm et 500 nm.

Le dispositif 10 peut comprendre un ensemble d'éléments d'orientations d'onde lumineuse configurés pour contrôler une onde lumineuse. Telle qu'utilisée ici, l'expression « contrôle d'onde lumineuse » (encore appelé 'manipulation d'onde lumineuse') fait référence à divers phénomènes liés aux ondes électromagnétiques qui peuvent se produire lorsqu'un faisceau optique notamment interagit avec la matière d'un objet donné, tel que représenté avec l'élément $h_{pq}$ sur la figure 2. Ces phénomènes comprennent notamment la déviation angulaire, la modification de phase, la transmission, la réflexion, l'absorption, la diffusion, la réfraction et/ou la diffraction de l'onde électromagnétique.

Avantageusement, le dispositif 10 peut comprendre une quatrième couche H, positionnée sur la deuxième couche, comprenant l'ensemble d'éléments d'orientations d'onde lumineuse configurés pour contrôler une onde lumineuse. la quatrième couche H peut être un film holographique comprenant un ensemble de ($M_x \times M_y$) hologrammes, notés $h_{pq}$. Chaque hologramme $h_{pq}$ correspond à un élément d'orientation (réflectif ou transmissif) et est associé à un réseau de diffraction $r_{pq}$ selon l'axe Z. Le film holographique peut être un photopolymère, par exemple du poly-méthacrylate de méthyle, ou une photorésine, d'épaisseur ($h_z$) comprise entre 2 μm et 20 μm. Un hologramme enregistré (ou codé) sur le film holographique peut s'étendre sur une longueur ($h_x$) comprise entre 2 μm et 20 μm, et une largeur ($h_y$) comprise entre 1 μm et 10 μm. Les grandeurs ($h_x$) et ($h_y$) des hologrammes peuvent être définies à partir des zones de superposition formées par les guide d'ondes $g_p$ et les électrodes $e_q$. Avantageusement, la longueur ($h_x$) peut être supérieure à la largeur ($e_x$) des électrodes $e_p$ induisant des hologrammes jointifs ou se recouvrant deux à deux, tel que représenté sur la figure 2 pour les hologrammes $h_{pq}$ et $h_{p(q-1)}$, permettant par exemple de diminuer la distance minimale entre deux électrodes.

L'empilement des différentes couches et éléments de la structure du dispositif 10 est agencé sur un support V. Le support V peut être un support transparent en verre ou en polycarbonate et compris dans un verre de lunette ou une visière du système optique portable d'affichage de données transparent.

Sur la figure 2, un unique guide d'ondes $g_p$ couplé à trois réseaux de diffraction ponctuels $r_{p(q+1)}$, $r_{pq}$ et $r_{p(q-1)}$, trois électrodes différentes $e_{(q+1)}$, $e_q$ et $e_{(q-1)}$ et trois hologrammes ponctuels $h_{p(q+1)}$, $h_{pq}$ et $h_{p(q-1)}$ sont représentés à titre de simplification et d'exemple non limitatif. L'homme du métier comprendra aisément que l'invention n'est pas limitée à de tels nombres et configurations de guides d'ondes, réseaux de diffraction et électrodes.

Sur la figure 2, le volume d'émission (c'est-à-dire le point d'émission $EP_{pq}$) correspond ainsi à une superposition, parallèlement à la surface d'émission S, du guide d'onde $g_p$ et de l'électrode $e_q$, couplés au réseau de diffraction ponctuel $r_{pq}$ et associés à l'hologramme $h_{pq}$. Pour activer, c'est-à-dire « faire émettre » le point d'émission $EP_{pq}$, le dispositif de projection d'image 10 est configuré pour transmettre une lumière cohérente dans le guide d'onde $g_p$ et pour moduler (ou polariser) électriquement l'électrode $e_q$. Une partie de l'onde lumineuse se propageant dans le guide d'onde $g_p$ est alors extraite au niveau du réseau de diffraction $r_{pq}$ couplé à l'indice de réfraction modifié par l'électrode $e_q$ comme représenté sur la figure 2 par la flèche. La lumière extraite au niveau du réseau de diffraction $r_{pq}$ se propage dans l'hologramme $h_{pq}$ (i.e. un élément d'orientations), de sorte que le dispositif 10 émet en sortie de l'hologramme $h_{pq}$, spatialement au niveau du point d'émission $EP_{pq}$, une onde lumineuse selon un vecteur d'onde $\vec{k}_{uv}$ et un déphasage prédéterminés et stockés (c'est-à-dire préalablement enregistrés ou encodés) dans l'hologramme $h_{pq}$. Les ondes lumineuses émises par différents points d'émission $EP_{pq}$ d'une même distribution $EPD_{uv}$ sont accordées en phase les unes par rapport aux autres selon le même vecteur d'onde $\vec{k}_{uv}$ pour que l'ensemble de ces ondes lumineuses forme une onde résultante dont le front d'onde est maîtrisé, par exemple une onde plane pour une accommodation à l'infini, ou une onde sphérique pour une accommodation à la distance d'accommodation $d_a$. Cette onde résultante se propage vers la pupille P de façon à former un point lumineux unique $R_{uv}$ au niveau de la rétine R. La phase et la direction de l'onde lumineuse émise par un point d'émission $EP_{pq}$ dépendent de l'information de phase enregistrée dans l'hologramme $h_{pq}$.

Chaque distribution $EPD_{uv}$ permet donc la formation d'un point lumineux perçu par l'utilisateur et associé à un pixel d'une image. Une image peut être formée en illuminant successivement différentes distributions de points d'émission $EPD_{uv}$, de façon à former une image comportant un nombre élevé de pixels. La fréquence d'illumination des différentes distributions de points d'émission $EPD_{uv}$ est dimensionnée de manière à ce que l'utilisateur puisse ressentir une formation d'une image fixe sous l'effet de la persistance rétinienne, malgré une formation techniquement séquentielle des différents pixels de l'image.

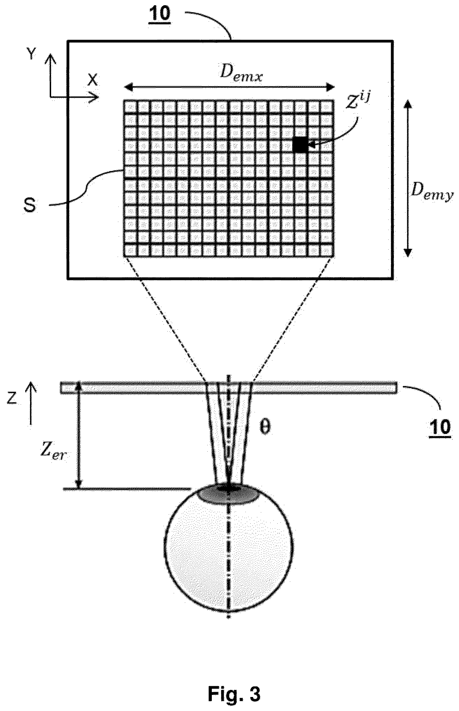

Dans un premier mode de réalisation, la surface d'émission S peut être discrétisée en ($L_x \times L_y$) zones d'émission élémentaires notées $\mathcal{Z}^{ij}$ formant un maillage continu de la surface d'émission S dans le plan (X,Y), comme représenté sur la figure 3,

Les nombres $L_x$ et $L_y$ sont des entiers positifs dont le produit ($L_x \times L_y$) est strictement supérieur à 1. Le paramètre $i$ est un indice associé à une discrétisation de la surface d'émission S selon l'axe X, avec $i \in [1, L_x]$, et le paramètre $j$ est un indice associé à une discrétisation de surface d'émission S selon l'axe Y, avec $j \in [1, L_y]$. Par exemple et sans limitation, un nombre minimum de produit des entiers ($L_x \times L_y$) peut être égale à ($1 \times 2$) ou ($2 \times 1$) zones d'émission élémentaires.

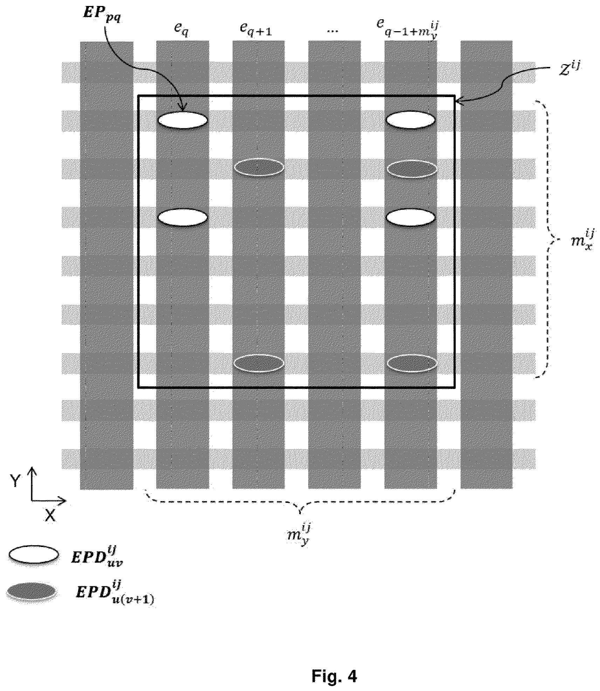

Chaque zone d'émission élémentaire $\mathcal{Z}^{ij}$ peut être associée à un nombre $m_x^{ij}$ de guides d'ondes $g_p^{ij}$, avec $m_x^{ij} \in [1, M_x]$, et à un nombre $m_y^{ij}$ d'électrodes $e_q^{ij}$, avec $m_y^{ij} \in [1, M_y]$, comme illustré sur la figure 4.

Une zone d'émission élémentaire $\mathcal{Z}^{ij}$ comprend donc un sous-ensemble de $\left( m_x^{ij} \times m_y^{ij} \right)$ points d'émission $EP_{pq}^{ij}$ défini parmi les ($M_x \times M_y$) points d'émission $EP_{pq}$ de la surface d'émission S.

Chaque zone d'émission élémentaire $\mathcal{Z}^{ij}$ peut être associée à un nombre fini de distributions de points d'émission, notés alors $EPD_{uv}^{ij}$ Chaque distribution de points d'émission $EPD_{uv}^{ij}$ d'une zone d'émission élémentaire $\mathcal{Z}^{ij}$ est constituée d'un ou plusieurs points d'émission $EP_{pq}^{ij}$ déterminés uniquement parmi les $\left( m_x^{ij} \times m_y^{ij} \right)$ de points d'émission $EP_{pq}^{ij}$ de la zone d'émission élémentaire $\mathcal{Z}^{ij}$.

Avantageusement, pour chaque zone d'émission élémentaire $\mathcal{Z}^{ij}$, la répartition des points d'émission $EP_{pq}^{ij}$ pour chaque distribution de points d'émission $EPD_{uv}^{ij}$ peut être déterminée de façon aléatoire ou pseudo-aléatoire.

Par exemple et sans limitation, la répartition des points d'émission $EP_{pq}^{ij}$ peut être déterminée à partir de la sélection aléatoire ou pseudo-aléatoire de $m_x^{ij}$ indices $p$ et de $m_y^{ij}$ indices $q$ associés respectivement aux différents guides d'ondes $g_p^{ij}$ et aux différentes électrodes $e_q^{ij}$ constituant la zone d'émission élémentaires $\mathcal{Z}^{ij}$ .

Chaque distribution de points d'émission $EPD_{uv}^{ij}$ est associée au point projeté sur la rétine R, noté alors $R_{uv}^{ij}$ . Ainsi, le nombre de distribution de points d'émission $EPD_{uv}^{ij}$ d'une zone d'émission élémentaire $\mathcal{Z}^{ij}$ est égal au nombre ( $n_x^{ij} \times n_y^{ij}$ ) de pixels de l'image à projeter associés aux points $R_{uv}^{ij}$ projetés sur la rétine R par la zone d'émission élémentaire $\mathcal{Z}^{ij}$ . Les entiers $n_x^{ij}$ et $n_y^{ij}$ sont des nombres de pixels définis respectivement selon l'axe X et sur l'axe Y, avec $n_x^{ij} \in [1, N_x]$ et $n_y^{ij} \in [1, N_y]$ . Par exemple, les $\left(n_x^{ij} \times n_y^{ij}\right)$ pixels de l'image à projeter peuvent être identiques pour chaque zone d'émission élémentaire $\mathcal{Z}^{ij}$ de la surface d'émission S. Les entiers $n_x^{ij}$ et $n_y^{ij}$ peuvent être définis à partir du nombre total de pixels ($N_x \times N_y$) de l'image à projeter et du nombre total de zones élémentaires ($L_x \times L_y$) discrétisant la surface d'émission S, selon les équations (01) et (02) suivantes :

$$n_x^{ij} = \frac{N_x}{L_x} \qquad (01)$$

$$n_y^{ij} = \frac{N_y}{L_y} \qquad (02)$$

Par exemple, une image à projeter peut comprendre (400 $\times$ 200) pixels et une surface d'émission S peut être discrétisée en (16 $\times$ 12) zones d'émission élémentaires $\mathcal{Z}^{ij}$ . Dans ce cas, chaque zone $\mathcal{Z}^{ij}$ peut comprendre par exemple (25 $\times$ 17) pixels de l'image à projeter (c'est-à-dire points $R_{uv}^{ij}$ projetés sur la rétine R) à partir d'un nombre de (25 $\times$ 17) distributions de points d'émission $EPD_{uv}^{ij}$ correspondantes.

Dans le cas où, pour chaque zone d'émission élémentaire $\mathcal{Z}^{ij}$ , les nombres $n_x^{ij} \times n_y^{ij}$ de pixels de l'image à projeter sont identiques, les indices $u^{ij}$ et $v^{ij}$ correspondent aux intervalles d'indices peuvent être définis à partir des indices ($i,j$) de la zone $\mathcal{Z}^{ij}$ , du nombre total de pixels ($N_x \times N_y$) de l'image à projeter et du nombre total de zones élémentaires ($L_x \times L_y$) discrétisant la surface d'émission S, et selon les expressions (03) et (04) suivantes :

$$u^{ij} \in \left[(i-1) \times \frac{N_x}{L_x} + 1; \; i \times \frac{N_x}{L_x}\right] \qquad (03)$$

$$v^{ij} \in \left[(j-1) \times \frac{N_y}{L_y} + 1; \; j \times \frac{N_y}{L_y}\right] \qquad (04)$$

Pour chaque zone d'émission élémentaire $\mathcal{Z}^{ij}$, un point d'émission $EP_{pq}^{ij}$ d'une distribution de points d'émission $EPD_{uv}^{ij}$ peut être associé à un vecteur d'onde $\vec{k}_{uv}^{ij}$ contenu dans un domaine angulaire, représenté par les gammes angulaires $\Delta\varphi$ et $\Delta\psi$, et défini à partir du nombre total de zones élémentaires ($L_x \times L_y$) discrétisant la surface d'émission S, selon les équations (05) et (06) suivantes :

$$\Delta\varphi = \frac{\theta_x}{L_x} \qquad (05)$$

$$\Delta\psi = \frac{\theta_y}{L_y} \qquad (06)$$

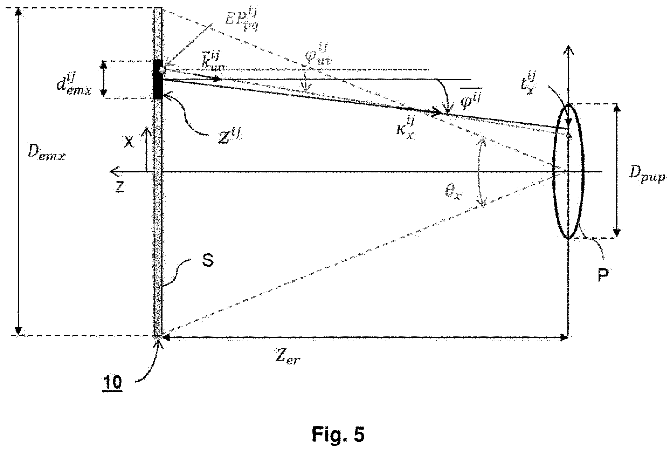

Dans les équations (05) et (06) précédentes, les grandeurs $\theta_x$ et $\theta_y$ correspondent à des projections angulaires respectivement sur l'axe X et l'axe Y du cône de visualisation $\theta$ (appelé encore champ de vision ou FOV, *field of view* selon l'expression anglo-saxonne correspondante) de la surface d'émission S du dispositif de projection d'image 10 par un oeil, comme illustré sur les figures 3 et 5.

En particulier, pour chaque zone d'émission élémentaire $\mathcal{Z}^{ij}$, le domaine angulaire ($\Delta\varphi, \Delta\psi$) peut être dirigé selon un vecteur central $\vec{\kappa^{ij}}$ orienté de la zone d'émission élémentaire $\mathcal{Z}^{ij}$ vers un point d'impact central $t^{ij}$ dans le plan (X,Y) au niveau de la pupille P. La direction angulaire du vecteur central $\vec{\kappa^{ij}}$ dans le plan (X,Y,Z) est caractérisé par des angles $\overline{\varphi^{ij}}$ et $\overline{\psi^{ij}}$ déterminés par rapport à l'axe optique Z dans les plans (X,Z) et (Y,Z) respectivement. A titre d'illustration, la projection $\kappa_x^{ij}$ dans le plan (X,Z) du vecteur central $\vec{\kappa^{ij}}$ du domaine angulaire de la zone d'émission élémentaire $\mathcal{Z}^{ij}$ est représentée sur la figure 5. L'angle $\overline{\varphi^{ij}}$ correspond à l'angle entre l'axe optique Z et la direction de la projection $\kappa_x^{ij}$ de la zone d'émission élémentaire $\mathcal{Z}^{ij}$ vers la coordonnée $t_x^{ij}$ du point impact central $t^{ij}$ sur l'axe X, comme représenté sur la figure 5. Les angles $\overline{\varphi^{ij}}$ et $\overline{\psi^{ij}}$ associés au vecteur central $\vec{\kappa^{ij}}$ peuvent être définis à partir du domaine angulaire, du nombre total de zones élémentaires ($L_x \times L_y$) discrétisant la surface d'émission S et de la position de la zone d'émission élémentaire $\mathcal{Z}^{ij}$ sur la surface d'émission S (représentée par exemple par les indices (i,j) de la zone $\mathcal{Z}^{ij}$). Les angles $\overline{\varphi^{ij}}$ et $\overline{\psi^{ij}}$ associés au vecteur central $\vec{\kappa^{ij}}$ peuvent ainsi être définis selon les équations (07) et (08) suivantes :

$$\overline{\varphi^{ij}} = \Delta\varphi \times \left(i - \frac{L_x+1}{2}\right) \qquad (07)$$

$$\overline{\psi^{ij}} = \Delta\psi \times \left(j - \frac{L_y+1}{2}\right) \qquad (08)$$

Avantageusement, pour chaque point d'émission $EP_{pq}^{ij}$ correspondant à l'intersection d'un guide d'onde $g_p$ et d'une électrode $e_q$ d'une distribution de points d'émission $EPD_{uv}^{ij}$ d'une zone d'émission élémentaire $\mathcal{Z}^{ij}$ (comme représenté sur la figure 4), la direction angulaire du vecteur d'onde $\vec{k}_{uv}^{ij}$ dans le plan (X,Y,Z) peut être caractérisé par des angles $\varphi_{uv}^{ij}$ et $\psi_{uv}^{ij}$ déterminés par rapport à l'axe optique Z dans les plan (X,Z) et (Y,Z) respectivement. En particulier, chaque hologramme $h_{pq}$ associé à un point d'émission $EP_{pq}^{ij}$ de la distribution de points d'émission $EPD_{uv}^{ij}$ peut encoder les directions angulaires $\varphi_{uv}^{ij}$ et $\psi_{uv}^{ij}$ définis selon les équations (09) et (10) suivantes :

$$\varphi_{uv}^{ij} = \left(u^{ij} - 1\right) \times \delta - \frac{\theta_x}{2} \qquad (09)$$

$$\psi_{uv}^{ij} = \left(v^{ij} - 1\right) \times \delta - \frac{\theta_y}{2} \qquad (10)$$

Dans les équations (09) et (10) précédentes, la grandeur $\delta$ correspond à la résolution angulaire de l'image et dépend du niveau de netteté désirée sur l'affichage. Par exemple, une résolution angulaire $\delta$ considérée comme une valeur de limite visuelle de résolution angulaire (c'est-à-dire une limite séparable) correspond à un angle d'une minute d'arc égale à l'angle de 1/60 ~ 0,02° (et converti en radians dans les calculs des équations précédentes). Il est à noter que les équations (09) et (10) précédentes sont donc obtenues avec une approximation des petits angles (i.e. tan $\delta \approx \delta$). Il peut dans ce cas être considéré qu'en dessous de cette valeur l'œil ne peut pas percevoir la pixellisation d'une image à projeter sur la rétine R.

Pour chaque zone d'émission élémentaire $\mathcal{Z}^{ij}$, les faisceaux émis par les points d'émission $EP_{pq}^{ij}$ peuvent impacter le plan de la pupille P autour du point d'impact central $t^{ij}$ sur une étendue d'impact $w^{ij}$. Par exemple et sans limitation, l'étendue d'impact $w^{ij}$ peut être considérée uniforme pour toutes les zones d'émission élémentaires $\mathcal{Z}^{ij}$ de la surface d'émission S. L'étendue $w^{ij}$ des impacts des points d'émission $EP_{pq}^{ij}$ dans le plan de la pupille P peut notamment prendre en compte l'étendue du domaine angulaire de la zone d'émission élémentaire $\mathcal{Z}^{ij}$ et la contribution d'une diffraction des points d'émission.

Les coordonnées $t_x^{ij}$ et $t_y^{ij}$ du point d'impact central $t^{ij}$ sur l'axe X et l'axe Y respectivement, dans le plan de la pupille P, peuvent être exprimés selon les équations (11) et (12) suivantes :

$$t_x^{ij} = \left(i - \frac{L_x+1}{2}\right) \times d_{emx}^{ij} + \left(\overline{\varphi^{ij}} \times Z_{er}\right) \qquad (11)$$

$$t_y^{ij} = \left(j - \frac{L_y+1}{2}\right) \times d_{emy}^{ij} + \left(\overline{\psi^{ij}} \times Z_{er}\right) \qquad (12)$$

Dans les équations (11) et (12) précédentes, les grandeurs $d_{emx}^{ij}$ et $d_{emy}^{ij}$ correspondent à la taille de la zone d'émission élémentaire $\mathcal{Z}^{ij}$ selon l'axe X et l'axe Y respectivement, comme représenté sur la figure 5. Les tailles $d_{emx}^{ij}$ et $d_{emy}^{ij}$ | peuvent dépendre des dimensions associées aux guides d'ondes et aux d'électrodes, de leurs répartition dans le plan de surface d'émission S, ainsi que des nombres $m_x^{ij}$ de guides d'ondes $g_p$ et $m_y^{ij}$ d'électrodes $e_q$ de la zone élémentaire $\mathcal{Z}^{ij}$.

La discrétisation de la surface d'émission S en zones d'émission élémentaires $\mathcal{Z}^{ij}$ peut être uniforme, les grandeurs $d_{emx}^{ij}$ et $d_{emy}^{ij}$ étant alors des valeurs de tailles constantes pour toutes les zones élémentaires $\mathcal{Z}^{ij}$, et pouvant être définies à partir de la taille de la surface d'émission S et du nombre total de zones élémentaires ($L_x \times L_y$) discrétisant la surface S, selon les équations (13) et (14) suivantes :

$$d_{emx}^{ij} = \frac{D_{emx}}{L_x} \qquad (13)$$

$$d_{emy}^{ij} = \frac{D_{emy}}{L_y} \qquad (14)$$

Par exemple et sans limitation, les grandeurs $d_{emx}^{ij}$ et $d_{emy}^{ij}$ peuvent être équivalentes à une même grandeur $\phi$ égale à 0.5 mm. Dans les équations (13) et (14) précédentes, les grandeurs $D_{emx}$ et $D_{emy}$ correspondent à la taille de la surface d'émission S selon l'axe X et l'axe Y respectivement, comme représentées sur les figures 3 et 5. En particulier, la taille de la surface d'émission S peut être déterminée en fonction du diamètre $D_{pup}$ de la pupille d'oeil (typiquement non négligeable et choisie égale à 4 mm typiquement). En effet, la taille de la surface d'émission S peut être déterminée de manière à être supérieure à la taille d'une zone couverte uniquement par la prise en compte du cône de visualisation $\Theta$, c'est-à-dire en prenant en compte le diamètre $D_{pup}$ de la pupille. Les grandeurs $D_{emx}$ et $D_{emy}$ peuvent alors être définies, avec une approximation des petits angles, selon les équations (15) et (16) suivantes :

$$D_{emx} = \left(Z_{er} \times \delta \times N_x\right) + D_{pup} \qquad (15)$$

$$D_{emy} = \left(Z_{er} \times \delta \times N_y\right) + D_{pup} \qquad (16)$$

La discrétisation de la surface d'émission S en zones d'émission élémentaires $\mathcal{Z}^{ij}$ peut également être uniforme, le nombre $m_x^{ij}$ de guides d'ondes $g_p$ dans une zone élémentaire et le nombre $m_y^{ij}$ d'électrodes $e_q$ dans une zone élémentaire étant alors des valeurs constantes pour toutes les zones élémentaires $\mathcal{Z}^{ij}$ et pouvant être définies à partir du nombre total des ($M_x \times M_y$) points d'émission de la surface d'émission S et du nombre total de zones élémentaires ($L_x \times L_y$) discrétisant la surface S, selon les équations (17) et (18) suivantes :

$$m_x^{ij} = \frac{M_x}{L_x} \qquad (17)$$

$$m_y^{ij} = \frac{M_y}{L_y} \qquad (18)$$

Alternativement, la discrétisation de la surface d'émission S en zones élémentaires $\mathcal{Z}^{ij}$ peut être non uniforme, le nombre $m_x^{ij}$ de guides d'ondes $g_p$ et le nombre $m_y^{ij}$ d'électrodes $e_q$ étant définis par exemple selon des fonctions croissantes et/ou décroissantes en fonction respectivement des axes X et Y. La non uniformité de la discrétisation de la surface d'émission S en zones élémentaires $\mathcal{Z}^{ij}$ peut similairement se traduire par des grandeurs $d_{emx}^{ij}$ et $d_{emy}^{ij}$ non homogènes en fonction respectivement des axes X et Y.

En particulier, il est à noter que les grandeurs associées à la surface d'émission S et aux différentes zones élémentaires sont exprimées, dans les équations précédentes, en utilisant l'approximation des petits angles à titre de simplification. Cette approximation est applicable pour une taille de surface d'émission S faible (i.e. cône de visualisation $\theta$ faible) et/ou une surface d'émission S centrée par rapport à l'axe optique Z du regard de l'utilisateur du système. Alternativement, si l'approximation des petits angles ne peut plus être applicable (i.e. $\tan \delta \neq \delta$) les formules des équations précédentes, notamment (09), (10), (15) et (16), sont plus complexes. Dans ce cas, des zones élémentaires périphériques d'une surface d'émission S peuvent être élargies dans le plan (X,Y) pour les angles de vision élevées par rapport aux zones élémentaires dites centrales par rapport à l'axe optique Z de cette même surface d'émission S.

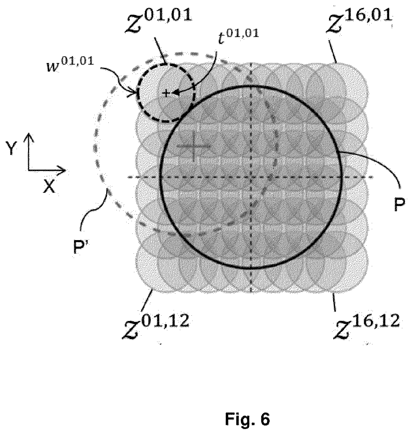

La figure 6 représente un schéma de l'ensemble des étendues d'impact $w^{ij}$ (i.e. zones d'éclairement sur la pupille) aux positions de point d'impact central $t^{ij}$ pour une surface d'émission S discrétisée par exemple en (16 × 12) zones d'émission élémentaires $\mathcal{Z}^{ij}$ de dimension $\phi$ égale à 0.5 mm et selon un champ de vision défini par des grandeurs $\theta_x$ et $\theta_y$ égales à (12°, 6°). Dans cet exemple, les points d'émission $EP_{pq}$ ont des tailles similaires sur toute la surface d'émission S, définies par un diamètre $\omega_1$ de 4 $\mu$m. Ainsi, pour chaque zone d'émission élémentaire $\mathcal{Z}^{ij}$, la dimension de l'étendue d'impact $w^{ij}$ (c'est-à-dire la 'tache' de diffraction au niveau de l'œil) est égale à 850 $\mu$m.

Comme représenté sur la figure 6, suivant le dimensionnement du dispositif 10 et de façon générale du système optique portable d'affichage de données transparent, certaines coordonnées $t_x^{ij}$ et $t_y^{ij}$ du point d'impact central $t^{ij}$ d'une zone d'émission élémentaire $\mathcal{Z}^{ij}$ peuvent être positionnées en dehors de la pupille P sur la plan (X,Y). Dans ce cas, une partie au moins des pixels associés aux indices $u^{ij}$ et $v^{ij}$ n'est pas projeté sur la rétine R de l'œil car une partie au moins de l'énergie lumineuse associé aux points d'émission $EP_{pq}^{ij}$ des distributions de points d'émission $EPD_{uv}^{ij}$ ne pénètre pas la pupille représentée par le cercle P sur la figure 6.

Cependant, cet effet est en partie compensé par l'orientation de l'œil dans son orbite conduisant à un déplacement de la position de la pupille P. En effet, comme illustré par le cercle P' en pointillé sur la figure 6, la position de la pupille peut être décalée dans le plan (X,Y) lorsque l'œil cible une direction différente à la direction de l'axe optique Z. Sur la figure 6, et selon le dimensionnement présenté, le décalage de la position de la pupille P' représente une cible selon une direction -6° : +3°, c'est-à-dire la direction concernée par l'émission d'un signal lumineux provenant de la zone d'émission élémentaire $\mathcal{Z}^{01,01}$. Dans ce cas, les pixels associés peuvent être projetés sur la rétine R de l'œil car l'énergie lumineuse associée aux points d'émission $EP_{pq}^{ij}$ des distributions de points d'émission $EPD_{uv}^{ij}$ pénètre la pupille P'. Le mouvement de l'œil dans son orbite permet donc de gérer la dispersion des signaux dans le plan de la pupille.

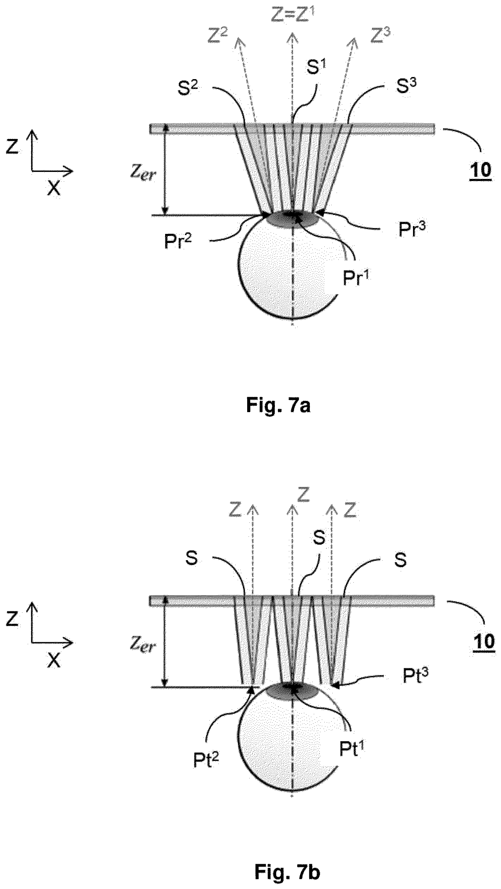

Avantageusement, pour étendre le cône de visualisation $\theta$ du dispositif de projection d'image 10 par un oeil, c'est-à-dire la gamme angulaire de projection d'image, la surface d'émission S peut être reproduite dans le plan (X,Y). En particulier, le dispositif de projection d'image 10 peut comprendre un nombre fini de surfaces d'émission $S^{xy}$ distinctes réparties dans le plan (X,Y). Pour chaque surface d'émission $S^{xy}$, chaque hologramme $h_{pq}$ associé à un point d'émission $EP_{pq}^{ij}$ d'une distribution de points d'émission $EPD_{uv}^{ij}$ peut encoder les directions angulaires $\varphi_{uv}^{ij}$ et $\psi_{uv}^{ij}$ déterminées par rapport à un axe optique $Z^{xy}$ mis en rotation dans les plans (X,Z) et (Y,Z) et centrées par rapport au point $Pr^{xy}$ correspondant à la position du centre de la pupille de l'œil après rotation dans son orbite et selon la direction angulaire de la zone de la surface d'émission $S^{xy}$ concernée. Le dispositif de projection d'image 10 schématisé sur la figure 7a représente les surfaces d'émission $S^1$, $S^2$ et $S^3$ positionnées consécutivement selon l'axe X et présentant des projections de cônes angulaires différentes selon l'axe optique $Z^1=Z$ et les axes optiques mis en rotation $Z^2$ et $Z^3$ centrées respectivement sur les points $Pr^1$, $Pr^2$ et $Pr^3$ de la projection du centre de la pupille P sur l'axe X.

En particulier, dans le cas des axes optiques $Z^{xy}$ mis en rotation par rapport à l'axe optique Z du regard de l'utilisateur du système, l'approximation des petits angles peut ne plus être applicable (i.e. tan $\delta \neq \delta$) pour des angles de vision élevés. Dans ce cas, les surfaces d'émission $S^{xy}$ peuvent être élargies dans le plan (X,Y) pour les angles de vision élevées par rapport à une surface d'émission dite centrale par rapport à l'axe optique Z. Sur la figure 7a, les surfaces d'émission $S^2$ et $S^3$, associées aux axes optiques mis en rotation $Z^2$ et $Z^3$, sont plus grandes que la surface d'émission centrale $S^1$ associée à l'axe optique $Z=Z^1$.

En outre, pour étendre la taille de la « boîte à oeil », c'est-à-dire la zone dans laquelle l'utilisateur (et donc son oeil) peut se déplacer devant le dispositif de projection d'image 10 tout en continuant à voir l'intégralité de l'image, la surface d'émission S peut également être dupliquée dans le plan (X,Y). Dans ce cas, le dispositif de projection d'image 10 peut comprendre un nombre fini d'une même surface d'émission S répartie dans le plan (X,Y). Pour chaque surface d'émission S répartie, chaque hologramme $h_{pq}$ associé à un point d'émission $EP_{pq}^{ij}$ d'une distribution de points d'émission $EPD_{uv}^{ij}$ peut encoder les directions angulaires $\varphi_{uv}^{ij}$ et $\psi_{uv}^{ij}$ déterminées par rapport à l'axe optique Z dans les plans (X,Z) et (Y,Z) et centrées par rapport au point $Pt^{xy}$ correspondant à la position du centre de la pupille de l'œil après translation dans le plan (X,Y). Le dispositif de projection d'image 10 schématisé sur la figure 7b représente trois fois la même surface d'émission S positionnée consécutivement selon l'axe X et présentant les trois mêmes projections $\theta_x$ de cône angulaire selon l'axe optique Z centrées respectivement sur les points $Pt^1$, $Pt^2$ et $Pt^3$ de la projection du centre de la pupille P translatée sur l'axe X.

Par exemple et sans limitation, dans les cas schématisés sur les figures 7(a) et 7(b), pour dupliquer ou reproduire des surfaces d'émission, la longueur des guides d'ondes $g_p$ peut être prolongée le long de l'axe X, et des ensembles de $M_y$ électrodes $e_q$ peuvent être dupliqués (notamment ici trois fois) dans la direction longitudinale des guides pour former les surfaces d'émission S et/ou $S^1$, $S^2$ et $S^3$. Similairement, la longueur des électrodes $e_q$ peut être prolongée le long de l'axe Y, et des ensembles de $M_x$ de guides d'ondes $g_p$ peuvent être dupliqués dans la direction transversale des guides pour former de nouvelles surfaces d'émission S et/ou $S^{xy}$.

La discrétisation de la surface d'émission S en zones d'émission élémentaires $Z^{ij}$ permet d'augmenter significativement la densification des points d'émission $EP_{pq}^{ij}$ d'une même distribution de points d'émission $EPD_{uv}^{ij}$. En particulier, la densité $\rho$ des points d'émission peut être définie selon l'expression (19) suivante :

$$\rho = \frac{1}{\phi^2} \times \left[ \left( Z_{er}^2 \times \delta^2 \right) + \left( \frac{D_{pup}^2}{N_x \times N_y} \right) + \left( Z_{er} \times \delta \times D_{pup} \times \frac{N_x + N_y}{N_x \times N_y} \right) \right] \qquad (19)$$

Le nombre $n_{em/EPD}$ de points d'émission $EP_{pq}$ d'une même distribution de points d'émission peut être approximé à partir de la taille de la surface d'émission S, la surface $s_{em}$ du point d'émission $EP_{pq}$, et du nombre de pixels ($N_x \times N_y$) de l'image à projeter, tel que défini selon l'expression (20) suivante :

$$n_{em/EPD} = \frac{D_{emx} \times D_{emy}}{s_{em} \times (N_x \times N_y)} \qquad (20)$$

Par exemple et sans limitation, le nombre $n_{em/EPD}$ peut être égal environ à 50. Pour une image à projeter de (400 $\times$ 200) pixels et une discrétisation de la surface d'émission S en (16 $\times$ 12) zones d'émission élémentaires $\mathcal{Z}^{ij}$, la densité $\rho$ de points d'émission $EP_{pq}^{ij}$ d'une même distribution de points d'émission $EPD_{uv}^{ij}$ peut être égale selon l'équation (19) précédente à environ 0,24%. Dans l'équation (20) précédente, la surface $s_{em}$ du point d'émission $EP_{pq}$ peut être définie à partir du diamètre $\omega_1$ du point d'émission $EP_{pq}$ selon l'expression (21) suivante :

$$s_{em} = \pi \times \frac{\omega_1^2}{4} \qquad (21)$$

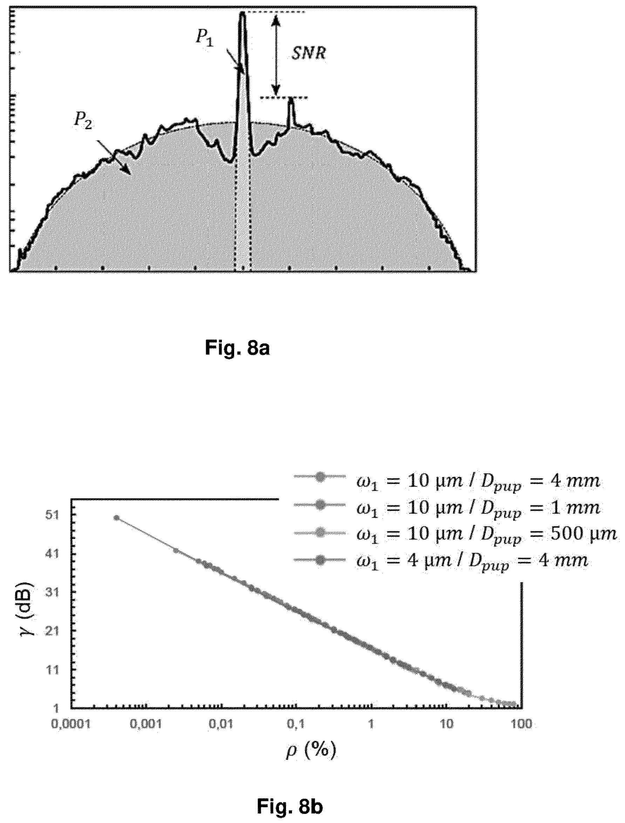

Il est à noter qu'il existe au moins un critère pour quantifier la qualité de l'image formée sur la rétine R par auto-focalisation des points d'émission $EP_{pq}$ d'une même distribution de points d'émission $EPD_{uv}$. En particulier, pour quantifier l'efficacité de l'auto-focalisation, un ratio de puissance noté $\gamma$ peut être défini à partir de la distribution spatiale de l'intensité de la réponse percussionnelle (désignée par l'acronyme PSF, ou *Point Spread Fonction* selon l'expression anglo-saxonne correspondante), formée par une distribution de points d'émission $EPD_{uv}$ à un point $R_{uv}$ sur la rétine R de l'œil, tel que représenté sur la figure 8a. Le ratio de puissance $\gamma$ peut être exprimé selon l'expression (22) suivante :

$$(22) \quad \gamma = -10 \log_{10} \frac{P_1}{P_1 + P_2}$$

Dans l'équation (22) précédente, la grandeur $P_1$ correspond à la puissance du pic central d'intensité formé par la distribution de points d'émission $EPD_{uv}$, c'est-à-dire l'aire du pic central représentée en gris clair sur la figure 8a. $P_1 + P_2$ désigne la puissance lumineuse totale, la grandeur $P_2$ correspondant à la puissance du bruit d'intensité formé par la distribution de points d'émission $EPD_{uv}$, c'est-à-dire la zone périphérique du pic central représentée en gris foncé du pic central représenté en gris.

Le ratio de puissance $\gamma$ est optimal pour une puissance $P_2$ nulle du bruit d'intensité formé par le point d'émission (valeur de $\gamma$ tendant vers 0). La figure 8b représente l'évolution du ratio de puissance $\gamma$ selon la variation de la densité $\rho$ des points d'émission $EP_{pq}$ d'une même distribution de points d'émission $EPD_{uv}$, et en fonction de différents paramètres caractéristiques (par exemple des dimensions caractéristiques) du système optique portable d'affichage de données transparent. Le critère $\gamma$ de quantification de la qualité de l'image est donc bien relié à la densité de surface de répartition des points d'émission $EP_{pq}$ sur la surface d'émission S, comme illustré sur la figure 8b. Or, la discrétisation de la surface d'émission S en zones d'émission élémentaires $\mathcal{Z}^{ij}$ permet d'augmenter significativement la densification des points d'émission $EP_{pq}^{ij}$ d'une même distribution de points d'émission $EPD_{uv}^{ij}$, ce qui permet ainsi un gain significatif (d'au moins 9 dB) sur la valeur du critère $\gamma$ par rapport à une configuration sans discrétisation de la surface (c'est-à-dire pour $\rho_0 = 0,001\%$).

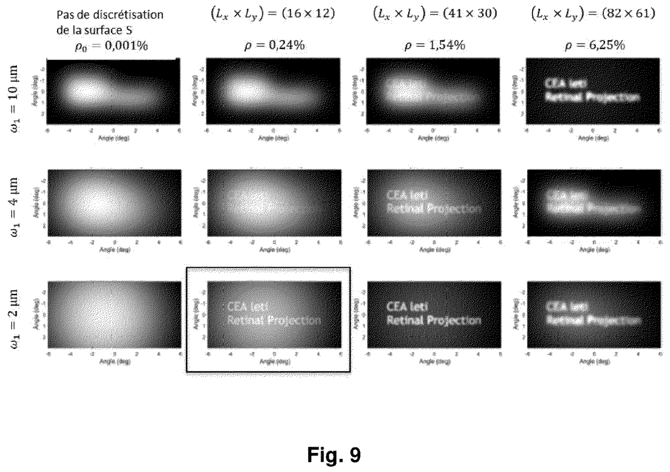

La figure 9 illustre les résultats de simulations d'image pour différentes dimensions comparatives du dispositif de projection d'image 10. En particulier, les résultats de simulations sont effectuées en fonction de la discrétisation de la surface d'émission S via le nombre ($L_x \times L_y$) de zones élémentaires $\mathcal{Z}^{ij}$ d'une part et en fonction de la taille des points d'émission $EP_{pq}$ définie par le diamètre $\omega_1$ d'autre part, et pour une image à projeter de (400 × 200) pixels représentant les mots « *CEA leti Retinal Projection* » (signifiant 'CEA leti Projection Rétinienne'). En particulier, la variation du nombre ($L_x × L_y$) de zones élémentaires $\mathcal{Z}^{ij}$ induit une variation de la taille de la zone d'émission ($\phi$ ou plus généralement les grandeurs $d_{emx}^{ij}$ et $d_{emy}^{ij}$) et ainsi une variation de la densité $\rho$ des points d'émission $EP_{pq}$ pour chaque distribution de points d'émission $EPD_{uv}$.

Comme illustré par les résultats de simulations d'image sur la figure 9, la mise en place de la discrétisation de la surface d'émission S, puis la réduction de la taille de la zone d'émission (i.e. augmentation de la densité) permet une amélioration du contraste de l'image à projeter. Cependant, l'augmentation de la taille de la zone d'émission induit une réduction du flou sur l'image à projeter. Il est également à noter que la réduction de la taille des points d'émission (i.e. faible valeur de diamètre $\omega_1$) induit une augmentation de la proportion de l'étendue du bruit d'intensité formé par les points d'émission par rapport au pic central d'émission et ainsi une réduction de l'impact de ce bruit sur la construction de l'image sur la rétine R. Par conséquent, les résultats de simulations d'image, illustrés par la figure 9, permettent d'indiquer un dimensionnement optimal possible avec des points d'émission compris entre 2 μm et 4 μm de diamètre et une taille de zone d'émission élémentaires $\mathcal{Z}^{ij}$ comprise entre 200 μm et 800 μm.

La fabrication d'un dispositif de projection d'une image 10 est mise en oeuvre à partir d'un procédé comprenant une phase de conception et une phase de fabrication matérielle du dispositif (10) ainsi conçu.

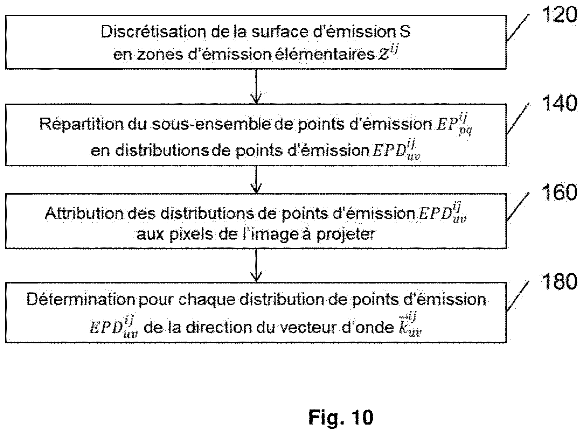

La figure 10 est un organigramme représentant des étapes de la phase de conception du dispositif de projection d'une image 10, selon des modes de réalisation de l'invention.

La phase de conception du dispositif de projection d'une image peut par exemple être mise en oeuvre par ordinateur.

A l'étape 120, une discrétisation de la surface d'émission S en ($L_x × L_y$) de zones d'émission élémentaires $\mathcal{Z}^{ij}$ peut être appliquée de manière à ce que chaque zone d'émission élémentaire $\mathcal{Z}^{ij}$ comprenne un sous-ensemble de $\left( m_x^{ij} × m_y^{ij} \right)$ de points d'émission $EP_{pq}^{ij}$.

A l'étape 140, une répartition du sous-ensemble de $\left( m_x^{ij} × m_y^{ij} \right)$ de points d'émission $EP_{pq}^{ij}$ selon $\left( n_x^{ij} × n_y^{ij} \right)$ distributions de points d'émission $EPD_{uv}^{ij}$ est effectuée.

A l'étape 160, pour chaque zone d'émission élémentaire $\mathcal{Z}^{ij}$, les $\left( n_x^{ij} × n_y^{ij} \right)$ distributions de points d'émission $EPD_{uv}^{ij}$ sont affectées (c'est-à-dire associées ou attribuées) à $\left( n_x^{ij} × n_y^{ij} \right)$ de pixels de l'image à projeter.

A l'étape 180, pour chaque distribution de points d'émission $EPD_{uv}^{ij}$, la direction du vecteur d'onde $\vec{k}_{uv}^{ij}$ de l'onde lumineuse résultante émise par les points d'émission $EP_{pq}^{ij}$ de la distribution de points d'émission $EPD_{uv}^{ij}$ est déterminée de sorte que la direction $\vec{k}_{uv}^{ij}$ est contenue dans un domaine angulaire dirigé selon un vecteur central $\vec{\kappa}^{ij}$ défini à partir du nombre ($L_x × L_y$) de zones d'émission élémentaires $\mathcal{Z}^{ij}$ discrétisant la surface d'émission S et de la position de la zone d'émission élémentaire $\mathcal{Z}^{ij}$ sur la surface d'émission S.

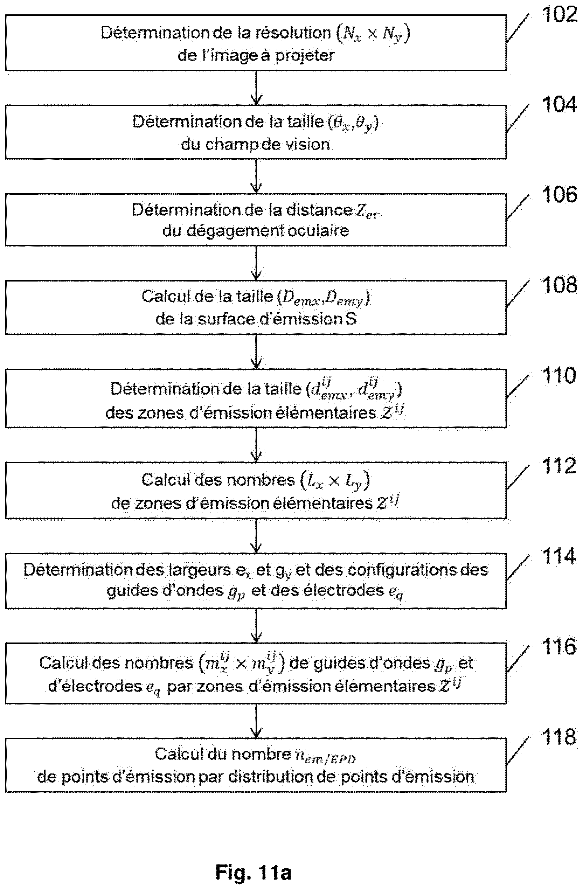

La figure 11a est un organigramme représentant des exemples de sous-étapes de l'étape 120 de discrétisation de la surface d'émission S dans la phase de conception du dispositif de projection d'une image 10, selon des modes de réalisation de l'invention.

A la sous-étape 102, la résolution de l'image à projeter peut être déterminée. Par exemple, la résolution ($N_x × N_y$) de l'image à projeter peut être choisie égale à (400 × 200). A la sous-étape 104, la taille du champ de vision peut être déterminée. Par exemple, les grandeurs $\theta_x$ et $\theta_y$ du champ de vision peuvent être choisies égales à 12° et 6° respectivement. A la sous-étape 106, la distance du dégagement oculaire peut être déterminée. Par exemple, la distance

$Z_{er}$ du dégagement oculaire peut être choisie égale à 20 mm. A la sous-étape 108, la taille de la surface d'émission S peut être calculée à partir des valeurs fixées aux sous-étapes 102 à 106. Selon les équations (15) et (16), les grandeurs $D_{emx}$ et $D_{emy}$ de la surface d'émission S peuvent être égales à environ 8 mm et 6 mm respectivement.

A la sous-étape 110, la taille des zones d'émission élémentaires $\mathcal{Z}^{ij}$ peut être déterminée. Par exemple, les grandeurs $d_{emx}^{ij}$ et $d_{emy}^{ij}$ des zones d'émission élémentaires peuvent être choisies égales à 500 $\mu$m. A la sous-étape 112, le nombre de zones d'émission élémentaires $\mathcal{Z}^{ij}$ peut être calculé des grandeurs $D_{emx}$ et $D_{emy}$ et des valeurs fixées à la sous-étape 110. Selon les équations (13) et (14), le nombre ($L_x \times L_y$) de zones d'émission élémentaires $\mathcal{Z}^{ij}$ peut être égale à environ (19 × 12). Le nombre de pixels définis par zones d'émission élémentaires $\mathcal{Z}^{ij}$ peut alors être déduit à partir des résultats de la sous-étape 110 et des valeurs fixées à la sous-étape 102. Par exemple, le nombre $\left(n_x^{ij} \times n_y^{ij}\right)$ de pixels, i.e. distribution de points d'émission, à encoder par zones d'émission élémentaires peut être égale à environ 350.

Avantageusement, à la sous-étape 114, des largeurs $e_x$ et $g_y$ et des configurations des guides d'ondes $g_p$ et des électrodes $e_q$ peuvent être déterminée. A la sous-étape 116, les nombres $\left(m_x^{ij} \times m_y^{ij}\right)$ de guides d'ondes $g_p$ et d'électrodes $e_q$ par zone d'émission élémentaire $\mathcal{Z}^{ij}$ peuvent être calculés à partir des résultats de la sous-étape 114. Et à la sous-étape 118, le nombre maximal $n_{em/EPD}$ de points d'émission par distribution de points d'émission peut être calculé à partir des nombres de guides d'ondes $g_p$ et d'électrodes $e_q$, et de la résolution de l'image à projeter (ou nombre $\left(n_x^{ij} \times n_y^{ij}\right)$ de pixels, i.e. distribution de points d'émission, par zones d'émission élémentaires $\mathcal{Z}^{ij}$ par exemple).

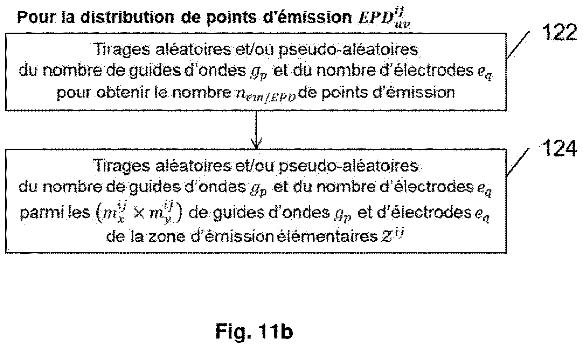

La figure 11b est un organigramme représentant des exemples de sous-étapes de l'étape 140 de répartition des points d'émission d'une distributions $EPD_{uv}^{ij}$ dans la phase de conception du dispositif de projection d'une image 10, selon des modes de réalisation de l'invention.

A la sous-étape 122, le nombre de guides d'ondes $g_p$ et le nombre d'électrodes $e_q$ peuvent être déterminés par tirages aléatoires et/ou pseudo-aléatoires, en particulier pour obtenir (ou s'approcher) le nombre $n_{em/EPD}$ de points d'émission. Par exemple, le nombre maximal $n_{em/EPD}$ de points d'émission par distribution de points d'émission calculé à la sous-étape 118 peut être égal à 50. Le nombre de guides d'ondes peut être égal à 10 et le nombre d'électrodes peut être égal à 5.

A la sous-étape 124, la position des guides d'ondes $g_p$ et la position des d'électrodes $e_q$ parmi les $\left(m_x^{ij} \times m_y^{ij}\right)$ de guides d'ondes $g_p$ et d'électrodes $e_q$ de la zone d'émission élémentaires $\mathcal{Z}^{ij}$ peuvent être déterminées par tirages aléatoires et/ou pseudo-aléatoires.

Les sous-étapes 122 et 124 peuvent être appliquées pour chaque distribution de points d'émission $EPD_{uv}^{ij}$ de manière séquentielle par exemple. Les tirages pseudo-aléatoires effectués pour une distribution $EPD_{uv}^{ij}$ peuvent prendre en compte les résultats préalables des sous-étapes 122 et 124 d'une ou plusieurs autres distributions de points d'émission d'une même zone d'émission élémentaire $\mathcal{Z}^{ij}$, tel qu'un couple d'un guide d'onde $g_p$ et d'une électrode $e_q$ représentant un point d'émission $EP_{pq}^{ij}$ spécifique ne peut être associé qu'à une unique distribution de points d'émission $EPD_{uv}^{ij}$.

La phase de fabrication matérielle du dispositif (10) prend en compte les résultats de la phase de conception préalablement mise en oeuvre. La phase de fabrication matérielle peut comprendre des étapes de fabrication de guides d'ondes, de réseaux de diffraction et d'électrodes, par des techniques conventionnelles, telles que par exemple et sans limitations des techniques de dépôt chimique ou physique. La phase de fabrication matérielle peut également comprendre des étapes d'assemblage de couches.

En outre, la phase de fabrication matérielle peut comprendre une étape d'enregistrement des hologrammes $h_{pq}$, chaque hologramme étant associé à un point d'émission $EP_{pq}$.

En particulier, l'étape d'enregistrement des hologrammes $h_{pq}$ peut prendre en compte les résultats de l'étape 180 de détermination, pour chaque distribution de points d'émission $EPD_{uv}^{ij}$, de la direction du vecteur d'onde $\vec{k}_{uv}^{ij}$ de l'onde lumineuse résultante émise par les points d'émission $EP_{pq}^{ij}$ de la distribution de points d'émission $EPD_{uv}^{ij}$.

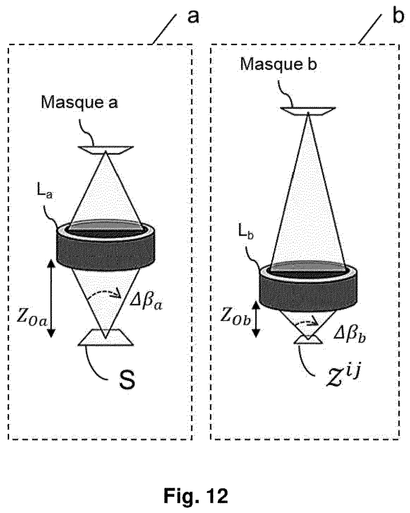

L'enregistrement des hologrammes est basé sur l'interférence de deux groupes de faisceaux lumineux sur le film holographique. Les franges d'interférence générées sont mémorisées physiquement ou chimiquement sur le film holographique entraînant une variation de l'indice de réfraction. Les deux groupes de faisceaux sont classiquement dénommés 'faisceaux de référence' et 'faisceaux objet'. Pour l'encodage des hologrammes $h_{pq}$ d'une distribution de points d'émission $EPD_{uv}$ (ou $EPD_{uv}^{ij}$), les faisceaux de référence correspondent aux ondes lumineuses extraites des réseaux diffraction $r_{pq}$ couplés optiquement aux guides d'ondes $g_p$ et aux électrodes $e_p$ sélectionnés pour former les points d'émission $EP_{pq}$ (ou $EP_{pq}^{ij}$) de la distribution $EPD_{uv}$ (ou $EPD_{uv}^{ij}$). L'étape d'enregistrement des hologrammes nécessite un système optique d'enregistrement consistant en la formation des faisceaux objet ayant un angle d'encodage $\beta$ avec la surface d'émission S (ou spécifiquement la zone d'émission élémentaire $\mathcal{Z}^{ij}$). L'angle d'encodage $\beta$ induit alors la direction du vecteur d'onde $\vec{k}_{uv}$ (ou $\vec{k}_{uv}^{ij}$). Les faisceaux objet, issus d'une source lumineuse cohérente non représentée sur les figures, sont obtenus à partir de la projection d'un masque donné à travers une lentille de convergence ($L_a$ ou $L_b$), tel que représenté sur la figure 12. Avantageusement, pour chaque distribution de points d'émission $EPD_{uv}$ (ou $EPD_{uv}^{ij}$), différentes zones de la surface d'émission S (ou spécifiquement la zone d'émission élémentaire $\mathcal{Z}^{ij}$) sont exposées séquentiellement à différents faisceaux objets d'angle d'encodage $\beta$ spécifique, de façon à former des points d'émission associés à des directions d'émission distinctes.

La discrétisation de la surface d'émission S selon les modes de réalisation de l'invention permet notamment de faciliter et d'accélérer l'étape d'enregistrement des hologrammes au cours de la phase de fabrication matérielle du dispositif 10 par rapport à une surface S non discrétisée. En effet, les points d'émission $EP_{pq}^{ij}$ d'une même distribution de points d'émission $EPD_{uv}^{ij}$ étant contenus dans une unique zone d'émission élémentaire $\mathcal{Z}^{ij}$ de taille inférieure à la taille globale de la surface d'émission S, l'enregistrement (ou encodage) de la direction du vecteur d'onde $\vec{k}_{uv}^{ij}$ dans les hologrammes associés aux points d'émission $EP_{pq}^{ij}$ permet de coder des angles sur des valeurs plus importantes. Tel que représenté par les systèmes optique d'enregistrement d'hologrammes sur la figure 12, l'encodage d'une zone ($\mathcal{Z}^{ij}$ sur la figure 12(b)) plus petite qu'une surface (S sur la figure 12(a)), induit une augmentation du cône de l'angle d'encodage $\Delta\beta$. Cette diminution de la zone d'encodage induit également une diminution des contraintes sur la cohérence temporelle de la source lumineuse de génération des faisceaux objet.

Les figures 1, 2 et 4 montrent des ensembles de guides d'ondes $g_p$ et d'électrodes $e_q$ de configurations rectilignes selon l'axe X et l'axe Y respectivement, chaque guide d'onde $g_p$ étant disposés perpendiculairement aux électrodes $e_q$ pour obtenir des points d'émission $EP_{pq}$ régulièrement répartis selon un quadrillage périodique spatialement sur la surface d'émission S.

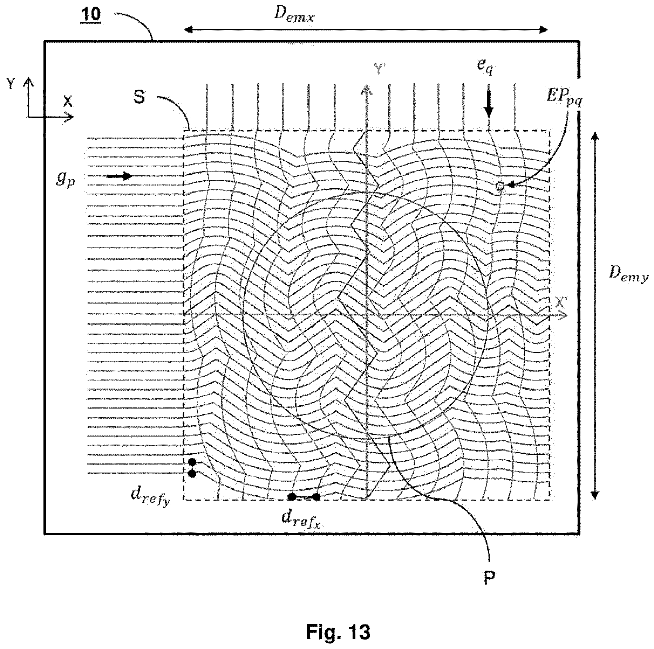

En variante, l'ensemble de $M_x$ guides d'ondes $g_p$ du dispositif de projection d'une image 10 peut être agencé selon une configuration d'isolignes non rectilignes dans le plan défini par la surface d'émission S, comme représenté sur la figure 13.

Tel qu'utilisée ici, l'expression de « isolignes non rectilignes » fait référence à un ensemble d'au moins deux courbes géométriques f1(X,Y) et f2(X,Y), définies dans un plan (X,Y), telles que la distance entre un point p1 appartenant à la courbe géométrique f1(X,Y) et la courbe géométrique f2(X,Y) est la même quel que soit le point p1, ladite distance étant définie par la longueur du chemin le plus court entre le point p1 et un point de la courbe géométrique f2(XY) selon une métrique de référence $d_{ref}$. Inversement, la distance entre un point p2 appartenant à la courbe géométrique f2(X,Y) et la courbe géométrique f1(X,Y) est la même quel que soit le point p2, ladite distance étant défini par la longueur du chemin le plus court entre le point p2 et un point de la courbe géométrique f1(XY) selon la métrique de référence $d_{ref}$. Ainsi, des isolignes non rectilignes correspondent à un ensemble de courbes géométriques, telles que les courbes de l'ensemble sont toujours séparées deux-à-deux d'une distance constante. De telles courbes géométriques peuvent être des courbes paramétriques définies dans le plan de la surface d'émission S. Pour une courbe géométrique donnée, une isoligne associée peut prendre une allure de courbe géométrique très variable en fonction de la valeur de la métrique $d_{ref}$ considérée.

Avantageusement, la configuration des électrodes sur la surface d'émission S peut être similaire à la configuration des guides d'ondes. Ainsi, comme représenté sur la figure 13, l'ensemble de $M_y$ électrodes $e_q$ du dispositif de projection d'image 10 peut être agencé selon une configuration d'isolignes non rectilignes dans le plan (X,Y) défini par la surface d'émission S.

Dans le cas où la configuration de guides d'ondes isolignes dans le plan (X,Y) est définie selon une valeur de métrique de référence $d_{ref_y}$ constante entre chacun des guides d'onde $g_p$, la configuration peut être une configuration de guides d'ondes isolignes dites régulières. De la même manière, dans le cas où la configuration de d'électrodes isolignes dans le plan (X,Y) est définie selon une valeur de métrique de référence $d_{ref_x}$ constante entre chacune des électrodes $e_q$, la configuration peut être une configuration d'électrodes isolignes dites régulières.

Les valeurs de métrique de référence $d_{ref_y}$ et $d_{ref_x}$ peuvent être variables entre différents guides d'onde $g_p$ et différents électrodes $e_q$ respectivement. Les variabilités de valeurs de métrique de référence permettent notamment d'améliorer la suppression des effets de diffraction liés à d'éventuelles périodicités générées dans les configurations de guides d'onde et d'électrodes.

Avantageusement, la configuration de guides d'ondes isolignes et/ou la configuration d'électrodes isolignes peut être mise en oeuvre en utilisant une méthode de type « marche rapide » (ou FMM, *Fast-Marching Method* selon l'expression anglo-saxonne correspondante) ou de type « lignes de niveau » (ou LSM, *Level-Set Method* selon l'expression anglo-saxonne correspondante).

Il est à noter que les méthodes FMM et LSM (James Sethian, Level Set Methods and Fast Marching Methods Evolving Interfaces in Computational Geometry, Fluid Mechanics, Computer Vision and Materials Science, Cambridge University Press, 1999) sont des algorithmes numériques permettant de résoudre les problèmes aux limites de l'équation Eikonal de manière à suivre l'évolution d'interfaces.

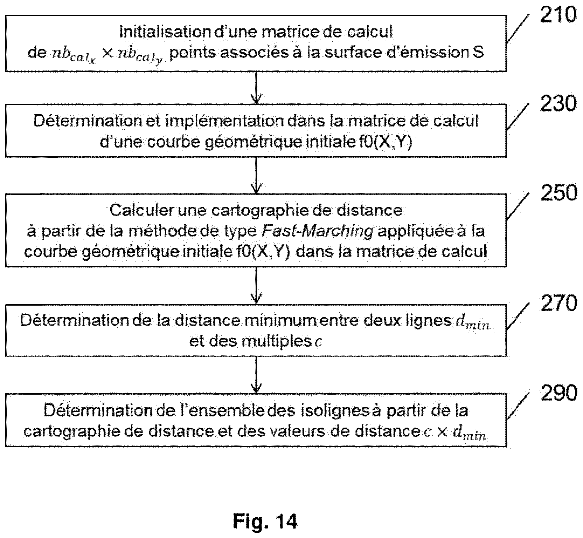

La figure 14 est un organigramme représentant des étapes de la phase de conception du procédé pour la fabrication du dispositif 10 et mises en oeuvre pour générer des configurations de l'ensemble de guides d'ondes $g_p$ et/ou de l'ensemble d'électrodes $e_q$ sur la surface d'émission S, selon des modes de réalisation de l'invention.

A l'étape 210, une matrice de calcul est initialisée. La matrice de calcul correspond à la surface d'émission S la taille $D_{emx}$ et $D_{emy}$, et est caractérisée selon des pas de calcul $d_{cal_x}$ et $d_{cal_y}$ prédéterminés. La matrice de calcul initialisée peut alors être une matrice comprenant un nombre $nb_{cal_x} \times nb_{cal_y}$ de points définis selon les équations (23) et (24) suivantes :

$$nb_{cal_x} = \left\lfloor \frac{D_{emx}}{d_{cal_x}} \right\rfloor + 1 \quad (23)$$

$$nb_{cal_y} = \left\lfloor \frac{D_{emx}}{d_{cal_y}} \right\rfloor + 1 \quad (24)$$

Les pas de calculs peuvent être définis par exemple en fonction de la largeur ($g_y$) des guides d'ondes $g_p$ et de la largeur ($e_x$) des électrodes $e_q$, et/ou en fonction des valeurs de métrique de référence $d_{ref_y}$ et $d_{ref_x}$ des guides d'onde $g_p$ et des électrodes $e_q$. En particulier, les pas de calculs peuvent être définis de manière à minimiser le temps nécessaire pour générer ces configurations tout en optimisant la résolution de calculs. Par exemple et sans limitation, les pas de calcul $d_{cal_x}$ et $d_{cal_y}$ peuvent être égaux à une même grandeur $d_{cal}$ comprise entre 1.5 $\mu$m et 250 nm.

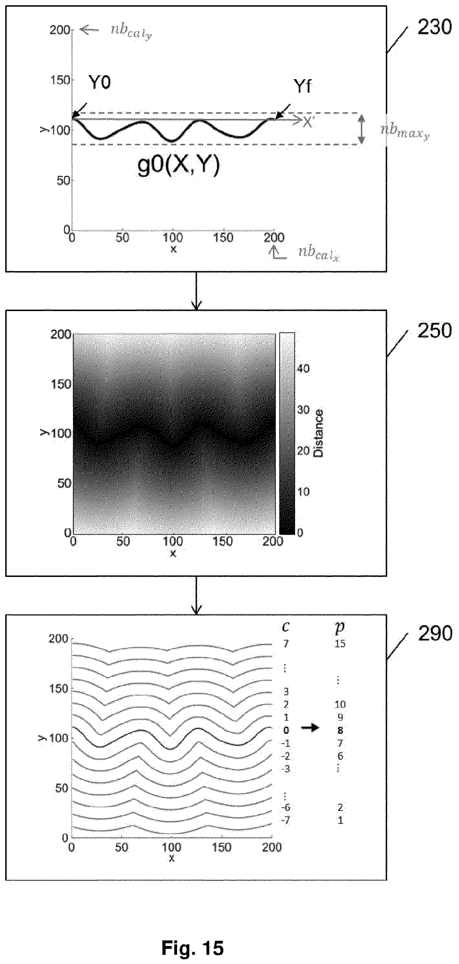

A l'étape 230, pour la configuration de guides d'ondes isolignes, une courbe géométrique initiale de guide d'onde g0(X,Y) est déterminée et implémentée dans la matrice de calcul initialisée, comme illustré par l'exemple d'implémentation de la figure 15 (i.e. étape 230). De manière équivalente, à l'étape 230, pour la configuration d'électrodes isolignes, une courbe géométrique initiale d'électrode e0(X,Y) peut être déterminée et implémentée dans la matrice de calcul initialisée.

La courbe géométrique initiale de guide d'onde et/ou d'électrode f0(X,Y), encore appelée 'courbe géométrique initiale', a une pluralité de caractéristiques de construction. Par exemple et sans limitations, des caractéristiques de construction peuvent comprendre :

- une courbe géométrique initiale f0(X,Y) définie par une fonction géométrique non rectiligne et s'étendant de part et d'autre de la surface d'émission S, à partir d'une position initiale (X0,Y0) vers une position finale (Xf,Yf) dans la matrice de calcul initialisée, la position initiale et la position finale étant disposées suivant un axe d'extension X' ou Y', sensiblement parallèle à l'axe X ou Y ; en particulier, comme illustré sur la figure 15 (i.e. étape 230), la courbe géométrique initiale de guide d'onde g0(X,Y) peut être définie à partir d'une position initiale (0,Y0) vers une position finale ($nb_{cal_x}$, Yf) ; de la même manière, la courbe géométrique initiale d'électrode e0(X,Y) peut être définie à partir d'une position initiale (X0, 0) vers une position finale (Xf, $nb_{cal_y}$) ;
- une courbe géométrique initiale f0(X,Y) comprenant uniquement des points ordinaires dit 'points réguliers' pour lesquels les dérivées partielles de la courbe selon X et Y ne sont pas simultanément nulles, c'est-à-dire dans ce cas que la courbe géométrique initiale f0(X,Y) ne comprend aucun point stationnaire dit 'point singulier' pour lequel les dérivées partielles de la courbe selon X et Y en ce point sont nulles, la tangente en un tel point apparaissant alors indéterminée ; en particulier, la courbe géométrique initiale f0(X,Y) ne comprend alors aucun point dit 'point double' pour lequel la courbe "repasse" sur elle-même (ou se croise) dans le plan (X,Y), ni aucun point dit 'point de rebroussement' pour lequel la courbe "rebrousse chemin" dans le plan (X,Y) ;
- une courbe géométrique initiale f0(X,Y) comprenant en tout point dans le plan (X,Y) un rayon de courbure supérieur ou égal à un rayon de courbure minimum re prédéfini. En particulier, un rayon de courbure minimum $rc_p$ associé aux guides d'ondes $g_p$ peut être défini en fonction des propriétés physiques des guides d'ondes $g_p$ , et/ou de leurs contraintes de fabrication respectives. Par exemple et sans limitation, le rayon de courbure minimum $rc_p$ associé aux guides d'ondes $g_p$ peut être égale à 20 $\mu$m ;
- une courbe géométrique initiale f0(X,Y) contenue dans une zone prédéterminée de la matrice de calcul initialisée ; par exemple et sans limitation, une zone dite « zone de contenu » peut être déterminée en fonction d'un nombre de points $nb_{max_x}$ ou $nb_{max_y}$ définis par rapport à la position initiale (X0,Y0) et/ou à la position finale (Xf,Yf) de la courbe.

Avantageusement, la courbe géométrique initiale f0(X,Y) peut être définie de manière aléatoire en respectant une ou plusieurs des caractéristiques de construction précédentes.

La courbe géométrique initiale f0(X,Y) peut par exemple être constituée d'une succession de segments. En particulier, la courbe géométrique initiale f0(X,Y) peut comprendre des segments inclinés selon un angle d'inclinaison $\beta(X,Y)$ par rapport à l'axe d'extension X' ou Y' sensiblement parallèle à l'axe X ou Y. L'angle d'inclinaison $\beta(X,Y)$ peut correspondre à une grandeur constante $\beta$ ou à une fonction variable dans le plan (X,Y), par exemple croissante, décroissante ou quelconque, et définie aléatoirement, pseudo-aléatoirement et/ou en fonction des caractéristiques de construction. Le long de l'axe d'extension X' ou Y', l'angle d'inclinaison $\beta(X,Y)$ peut être positif ou négatif. Par exemple, d'angle d'inclinaison peut être constant $\beta$, et alternativement positif et négatif. La taille de chaque segment incliné peut être déterminée aléatoirement, pseudo-aléatoirement et/ou en fonction des caractéristiques de construction. Les segments de la courbe géométrique initiale f0(X,Y) peuvent alors être reliés entre eux par des segments courbes de rayon de courbure supérieur ou égal au rayon de courbure minimum.

Les positions initiales (0,Y0) et (X0,0), et/ou similairement la « zone de contenu » de la courbe géométrique initiale, peuvent être définies aléatoirement, pseudo-aléatoirement et/ou définies par exemple de manière à être centrées dans la matrice de calcul initialisée respectivement selon l'axe Y et l'axe X.

A l'étape 250, une fonction de distance peut être appliquée à courbe géométrique initiale f0(X,Y) pour générer la configuration de guides d'ondes isolignes et/ou la configuration d'électrodes isolignes. Une telle fonction de distance correspond à une succession d'étapes permettant d'appliquer une ou plusieurs valeurs de métrique de référence $d_{ref}$ entre différentes courbes formant une configuration d'isolignes non rectilignes, à partir de la courbe géométrique initiale f0(X,Y). Par exemple et sans limitation, une fonction de distance utilisée à l'étape 250 peut être la méthode de type *Fast-Marching.*

A titre d'illustration, à l'étape 250 pour la configuration de guides d'ondes isolignes, une cartographie de distance (ou *distance map* selon l'expression anglo-saxonne correspondante) peut être calculée à partir de la méthode de type *Fast-Marching* (ou *Level-Set)* appliquée à la courbe géométrique initiale f0(X,Y) dans la matrice de calcul. Pour chacun des $nb_{cal_x} \times nb_{cal_y}$ points de la matrice de calcul, la métrique isotrope arbitraire de distance est alors calculée par rapport au point le plus proche de la courbe géométrique initiale f0(X,Y) implémentée dans la matrice de calcul.

La figure 15 (i.e. étape 250) illustre le résultat du calcul d'une cartographie de distance pour chaque point de la matrice par rapport à une courbe géométrique initiale de guide d'onde g0(X,Y) déterminée à l'étape 230 précédente.

A l'étape 270, la valeur d'une distance minimale $d_{min}$ peut être déterminée.

En particulier, dans le cas de la détermination de la configuration de guides d'ondes isolignes, la distance minimale $d_{min}$ correspond à la distance d'écartement $d_{min-p}$ constante et fixée entre deux guides d'ondes $g_p$ sur la surface d'émission S. La valeur de $d_{min-p}$ peut être définie par rapport à la largeur ($g_y$) des guides d'ondes $g_p$, par exemple selon l'expression (25) suivante :

$$d_{min-p} = 3 \times g_y \qquad (25)$$

Dans le cas de la détermination de la configuration d'électrodes isolignes la distance minimale $d_{min}$ correspond à la distance d'écartement $d_{min-q}$ constante et fixée entre électrodes $e_q$ sur la surface d'émission S. La valeur de $d_{min-q}$ peut être définie par rapport à la largeur ($e_x$) des électrodes $e_q$, par exemple selon l'expression (26) suivante :

$$d_{min-q} = 1{,}2 \times e_x \qquad (26)$$

A l'étape 270 également, un ou plusieurs multiples e de la valeur de la distance minimale $d_{min}$ peuvent être déterminés. La détermination de ces multiples peut dépendre notamment de la taille $D_{emx}$ et $D_{emy}$ de la surface d'émission S, et de la position initiale (X0,Y0) de la courbe géométrique initiale f0(X,Y).

Par exemple et sans limitation, dans le cas où la position initiale (0,Y0) est fixée de manière à être centrée dans la matrice de calcul initialisée respectivement selon l'axe Y, les multiples $c \times d_{min}$ peuvent être déterminés pour les indices e d'intervalle défini selon l'expression (27) suivante :

$$c = \left[ 1; \left| \frac{D_{emy}}{2 \times d_{min-q}} \right| \right] \qquad (27)$$

A l'étape 290, l'ensemble des isolignes (appelés également chemins d'isolignes) d'une configuration peuvent être déterminées à partir de la cartographie de distance et en fonction des multiples e de la valeur de la distance minimale $d_{min}$. En particulier, pour chaque ordre e, une isoligne associée à la courbe géométrique initiale f0(X,Y) implémentée correspond à la position des points de la matrice de calcul associée à la valeur la plus proche de la distance $c \times d_{min}$. Ainsi, à l'étape 290, la configuration de guides d'ondes et/ou ladite configuration d'électrodes sont déterminées.

La figure 15 (i.e. étape 290) illustre le résultat d'un ensemble des isolignes associé à la courbe géométrique initiale de guide d'onde g0(X,Y) correspondant à l'isoligne d'ordre c = 0. L'ensemble des isolignes déterminé peut ainsi être obtenu pour les isolignes définies à partir des ordres c = [-7; -1] et c = [1; 7]. Dans cet exemple, chaque guide d'onde $g_p$ d'ordre p correspond alors à une isoligne d'ordre c.

Les étapes de génération des configurations de l'ensemble de guides d'ondes $g_p$ et de l'ensemble d'électrodes $e_q$ sur la surface d'émission S de la phase de conception du procédé pour la fabrication du dispositif de projection d'une image 10 permet en particulier de minimiser les dégradations de l'image projetée liées à des périodicités spatiales entre les points d'émission $EP_{pq}$ et d'optimiser le nombre de points d'émission $EP_{pq}$ sur la surface d'émission S pour maximiser la résolution de l'image formée sur la rétine R, pour obtenir par exemple un contraste optimisé.

En particulier, l'implémentation de méthodes de type *Fast-Marching* (ou *Level-Set*) pour calculer les cartographies de distance à l'étape 250 permet de favoriser une répartition apériodique des intersections entre les guides d'ondes $g_p$ et les électrodes $e_q$, et donc la répartition apériodique des différents point d'émission $EP_{pq}$, ce qui induit une amélioration de la qualité des images.

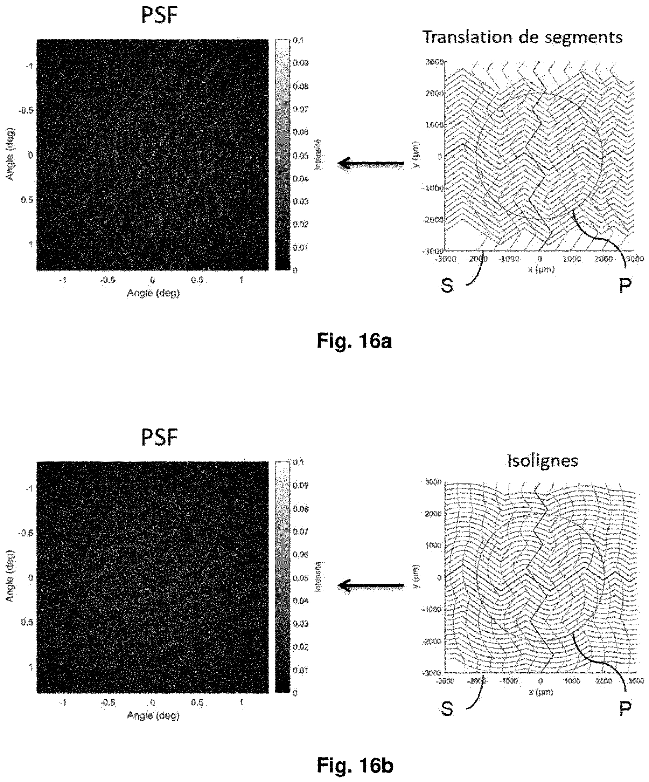

La figure 16a représente le résultat d'une simulation de la distribution spatiale de l'intensité de la réponse percussionnelle (i.e. PSF) sur la rétine R formée par des points d'illumination associés à des distributions de points d'émission sur la surface d'émission S définies à partir de configurations de guides d'ondes et d'électrodes obtenues par translation d'une courbe segmentés selon l'axe Y et l'axe X respectivement. Ces configurations sont appelées configurations par « translations de segments » par la suite. Bien que de telles configurations améliorent l'apériodicité de la répartition des différents points d'émission $EP_{pq}$ par rapport à des configurations rectilignes, de telles configurations ne permettent pas d'éviter des effets de diffraction lors de la formation de l'image sur la rétine R puisque, comme illustré sur la simulation sur figure 16a, l'intensité la réponse percussionnelle présente des lignes dans le bruit généré par l'alignement de certains points d'émission $EP_{pq}$.

Inversement, la figure 16b représente le résultat d'une simulation de la distribution spatiale de l'intensité la réponse percussionnelle (i.e. PSF) sur la rétine R formée par des points d'illumination associés à des distributions de points d'émission sur la surface d'émission S définies à partir de configurations de guides d'ondes et d'électrodes isolignes. Comme illustré sur la figure 16b, de telles configurations permettent limiter les effets de diffraction lors de la formation de l'image sur la rétine R et ainsi d'obtenir un bruit plus uniforme.

Par ailleurs, le calcul du nombre d'intersections entre les guides d'ondes $g_p$ et les électrodes $e_q$, et donc de points d'émission $EP_{pq}$, pour une surface d'émission S associée à des configurations de guides d'ondes et d'électrodes isolignes augmente (notamment de plus de 14%) par rapport à une surface d'émission S associée à des configurations de guides d'ondes et d'électrodes par « translations de segments », chaque surface d'émission S comprenant dans ce cas, les mêmes nombres $M_x$ de guides d'ondes $g_p$ et $M_y$ d'électrodes $e_q$. Cette augmentation significative de points d'émission $EP_{pq}$ induit une augmentation de la densité et donc une augmentation du nombre possible de pixels de l'image à projeter et/ou une augmentation de l'intensité des points illuminés sur la rétine R, tout en améliorant la répartition apériodique des différents point d'émission $EP_{pq}$.

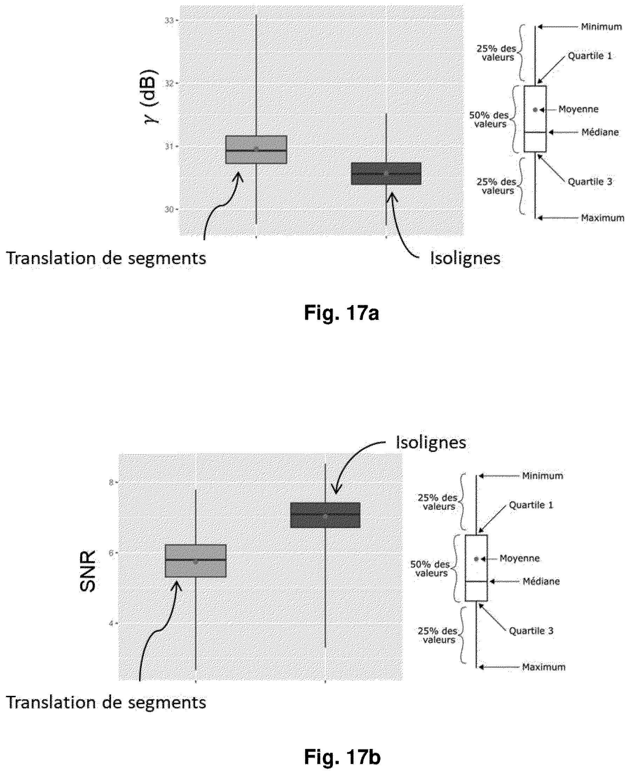

Les figures 17a et 17b représentent les résultats de la comparaison de critères de quantification de la qualité de l'image générés à partir de deux surfaces d'émission S distinctes associées chacune un tirage aléatoire d'un nombre de 25000 points d'émission $EP_{pq}$. La première surface d'émission S est associée à des configurations de guides d'ondes et d'électrodes par « translations de segments », et la seconde surface d'émission S est associée à des configurations de guides d'ondes et d'électrodes isolignes.

En particulier, la figure 17a représente les résultats de la comparaison des ratios de puissance $\gamma$ pour chacune des surfaces d'émission S distinctes. Comme illustré, l'implémentation d'isolignes permet de diminuer le ratio de puissance $\gamma$ par rapport à des configurations par « translations de segments », ce qui signifie que cela induit une diminution de la puissance du bruit d'intensité formé par la distribution de points d'émission par rapport à la puissance du pic central d'intensité et ainsi une amélioration de la qualité de l'image projetée.

La figure 17b représente les résultats de la comparaison des rapports signal sur bruit (ou SNR pour *Signal-to-Noise Ratio* selon l'expression anglo-saxonne correspondante) pour chacune des surfaces d'émission S distinctes. Il est à noter que le critère SNR, tout comme le ratio de puissance $\gamma$, permet de quantifier l'efficacité de l'auto-focalisation d'une distribution de points d'émission $EPD_{uv}$ à un point $R_{uv}$ sur la rétine R de l'œil. Comme illustré sur la figure 8a, le critère SNR peut être évalué à partir de la différence entre la hauteur du pic central d'intensité formé par la distribution de points d'émission et la hauteur du pic dit 'pic secondaire'. Comme montré sur la figure 17(b), l'implémentation d'isolignes permet d'augmenter le rapport signal sur bruit par rapport à des configurations par « translations de segments », ce qui signifie également une amélioration de la qualité de l'image projetée.

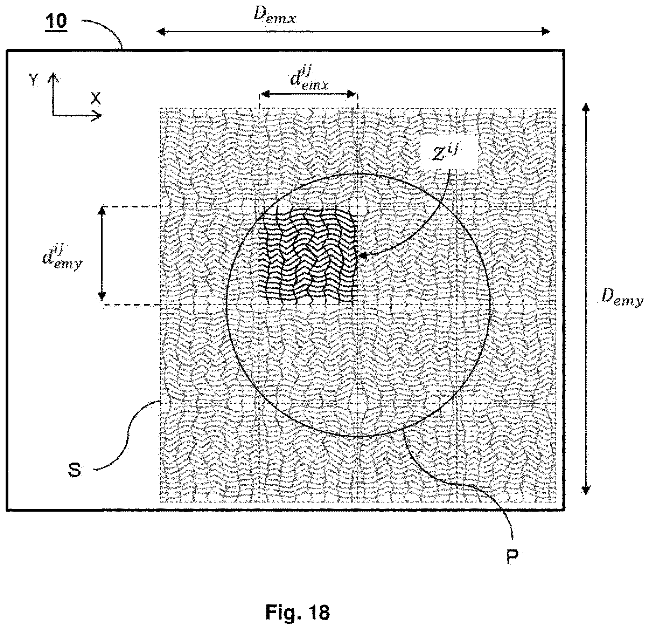

Selon certains modes de réalisation, la surface d'émission S peut être discrétisée en $(L_x \times L_y)$ zones d'émission élémentaires $\mathcal{Z}^{ij}$ dans le plan (X,Y), comme illustré par la figure 18. Chaque zone d'émission élémentaire $\mathcal{Z}^{ij}$ peut être associée à un nombre $m_x^{ij}$ de guides d'ondes $g_p^{ij}$ et à un nombre $m_y^{ij}$ d'électrodes $e_q^{ij}$, de manière à générer un sous-ensemble de $\left( m_x^{ij} \times m_y^{ij} \right)$ points d'émission $EP_{pq}^{ij}$ définis parmi les $(M_x \times M_y)$ points d'émission $EP_{pq}$ de la surface d'émission S. Chaque zone d'émission élémentaire $\mathcal{Z}^{ij}$ peut alors être associée à un nombre fini de distributions de points d'émission $EPD_{uv}^{ij}$. Chaque distribution de points d'émission $EPD_{uv}^{ij}$ d'une zone d'émission élémentaire $\mathcal{Z}^{ij}$ est alors constituée d'un ou plusieurs points d'émission $EP_{pq}^{ij}$ déterminés uniquement parmi les $\left( m_x^{ij} \times m_y^{ij} \right)$ points d'émission $EP_{pq}^{ij}$ de la zone d'émission élémentaire $\mathcal{Z}^{ij}$. Pour chaque zone d'émission élémentaire $\mathcal{Z}^{ij}$, le sous-ensemble de $m_x^{ij}$ guides d'ondes $g_p^{ij}$ peut être agencé selon une sous-configuration de guides d'ondes isolignes non rectilignes, et le sous-ensemble de $m_y^{ij}$ électrodes $e_q^{ij}$ peut être agencé selon une sous-configuration d'électrodes isolignes non rectilignes.

Avantageusement, pour chaque zone d'émission élémentaire $Z^{ij}$, la sous-configuration de guides d'ondes isolignes et/ou la sous-configuration d'électrodes isolignes peuvent être générées à partir de l'application de la méthode de type *Fast-Marching* (ou *Level-Set*) comme décrit notamment par les étapes de la phase de conception pour la génération des configurations.

Par exemple et sans limitation, pour une zone d'émission élémentaire $Z^{ij}$, une sous-configuration d'isolignes non rectiligne peut être formée à partir d'une courbe géométrique initiale s'étendant dans le plan de la surface d'émission S de part et d'autre de la zone d'émission élémentaire $Z^{ij}$, à partir d'une position initiale intermédiaire vers une position finale intermédiaire disposées suivant un axe d'extension X' ou Y' sensiblement parallèle à l'axe X ou à l'axe Y.

Dans les modes de réalisation précédemment décrits, chaque point d'émission $EP_{pq}$ est formé à partir d'un hologramme $h_{pq}$ inscrit dans un film holographique H et illuminé par une lumière extraite d'un guide de lumière $g_p$. Dans ces cas, chaque hologramme $h_{pq}$ permet le contrôle de la phase et le contrôle de l'angle de l'onde lumineuse extraite au niveau du réseau de diffraction $r_{pq}$. D'autres alternatives pour former (ou configurer) l'ensemble d'éléments d'orientations et donc les points d'émissions peuvent être envisagées.

En particulier, la quatrième couche (i.e. le film holographique H) peut être remplacée par un modulateur de lumière spatial (ou SLM pour *Spatial Light Modulator* selon l'expression anglo-saxonne correspondante) disposé en vis-à-vis du réseau de diffraction. Un SLM localisé au niveau d'un point d'émission peut être formé par des cristaux liquides par exemple. Le SLM peut alors être configuré (c'est-à-dire fabriqué) pour contrôler la phase de l'onde lumineuse extraite au niveau du réseau de diffraction $r_{pq}$. Dans ce cas, chaque réseau de diffraction $r_{pq}$ peut être configuré (c'est-à-dire fabriqué) pour contrôler l'angle de l'onde lumineuse en plus de l'extraction de l'onde lumineuse. En variante, la quatrième couche peut comprendre en plus un film holographique hologramme $h_{pq}$ configuré (c'est-à-dire fabriqué) pour contrôler uniquement l'angle de l'onde lumineuse.

Il convient de noter que certaines caractéristiques de l'invention peuvent présenter des avantages lorsqu'elles sont considérées séparément.

L'homme du métier comprendra aisément que certaines étapes et sous-étapes de procédé décrites précédemment peuvent être réalisées de manière simultanée et/ou selon un ordre différent, par exemple selon un ordre défini à partir des caractéristiques du dispositif de projection d'une image 10.

Le dispositif et les procédés décrits précédemment selon les modes de réalisation de l'invention ou des sous éléments de ce système peuvent être mis en oeuvre de diverses manières par matériel (« hardware »), logiciel, ou une combinaison de matériel et de logiciels, notamment sous la forme de code de programme pouvant être distribué sous la forme d'un produit de programme, sous diverses formes.

L'invention n'est pas limitée aux modes de réalisation décrits ci-avant à titre d'exemple non limitatif. Elle englobe toutes les variantes de réalisation qui pourront être envisagées par l'homme du métier. En particulier, l'homme du métier comprendra que l'invention n'est pas limitée aux différentes zones d'émission élémentaires et aux différentes configurations d'isolignes du dispositif de projection d'une image décrites à titre d'exemple non limitatif. En particulier, certains modes de réalisation de l'invention peuvent être combinés.

**Revendications**

1. Dispositif de projection d'une image (10) sur un oeil, le dispositif étant défini dans un repère orthogonal (X,Y,Z) et comprenant une surface d'émission S s'étendant généralement dans le plan (X,Y) dudit repère orthogonal (X,Y,Z), la surface d'émission S comprenant un empilement d'éléments, lesdits éléments comprenant un ensemble de $M_x$ guides d'ondes $g_p$, un ensemble de $M_x \times M_y$ réseaux de diffraction $r_{pq}$ et un ensemble de $M_y$ électrodes $e_q$, $M_x$ et $M_y$ étant des entiers positifs dont le produit $M_x \times M_y$ est strictement supérieur à 1, chaque réseau de diffraction $r_{qp}$ étant positionné au niveau de l'intersection d'un desdits guides d'ondes $g_p$ et d'une desdites électrodes $e_p$ de manière à former un point d'émission $EP_{pq}$ d'une onde lumineuse,

   **caractérisé en ce que** ladite surface d'émission S est discrétisée en une pluralité de $L_x \times L_y$ zones d'émission élémentaires $Z^{ij}$ selon un maillage continue dans le plan (X,Y), chaque zone d'émission élémentaire $Z^{ij}$ comprenant un sous-ensemble de $m_x^{ij} \times m_y^{ij}$ points d'émission $EP_{pq}^{ij}$ parmi les $M_x \times M_y$ points d'émission $EP_{pq}$ de la surface d'émission S, ledit sous-ensemble de $m_x^{ij} \times m_y^{ij}$ points d'émission $EP_{pq}^{ij}$ étant réparti selon un nombre

$n_x^{ij} \times n_y^{ij}$ de distributions de points d'émission $EPD_{uv}^{ij}$, les points d'émission $EP_{pq}^{ij}$ d'une même distribution de points d'émission $EPD_{uv}^{ij}$ de ladite zone d'émission élémentaire $Z^{ij}$ étant configurés pour émettre une onde lumineuse résultante dirigée selon un vecteur d'onde $\vec{k}_{uv}^{ij}$ contenu dans un domaine angulaire défini à partir du nombre $L_x \times L_y$ de zones d'émission élémentaires $Z^{ij}$ discrétisant ladite surface d'émission S et de la position de ladite zone d'émission élémentaire $Z^{ij}$ sur ladite surface d'émission S, le nombre $n_x^{ij} \times n_y^{ij}$ de distributions de points d'émission $EPD_{uv}^{ij}$ correspondant au nombre $n_x^{ij} \times n_y^{ij}$ de pixels de ladite image à projeter dans ledit domaine angulaire.

2. Dispositif de projection d'une image (10) selon la revendication 1, dans lequel la discrétisation de ladite surface d'émission S est uniforme dans le plan (X,Y).

3. Dispositif de projection d'une image (10) selon la revendication 1, dans lequel la discrétisation de ladite surface d'émission S est non-uniforme dans le plan (X,Y).

4. Dispositif de projection d'une image (10) selon l'une des revendications précédentes, dans lequel, pour chaque zone d'émission élémentaires $Z^{ij}$, la répartition des points d'émission $EP_{pq}^{ij}$ dans une distribution de points d'émission $EPD_{uv}^{ij}$ est déterminée de façon aléatoire ou pseudo-aléatoire.

5. Dispositif de projection d'une image (10) selon l'une des revendications précédentes, dans lequel ledit empilement de la surface d'émission S comprend en outre un ensemble de $M_x \times M_y$ hologrammes $h_{pq}$, chaque hologramme $h_{pq}$ étant positionné au niveau de ladite intersection entre un desdits guides d'ondes $g_p$ et une desdites électrodes $e_p$ pour former ledit point d'émission $EP_{pq}$, les hologrammes $h_{pq}$ associés auxdits points d'émission $EP_{pq}^{ij}$ d'une même distribution de points d'émission $EPD_{uv}^{ij}$ de ladite zone d'émission élémentaire $Z^{ij}$ étant encodés de sorte que lesdits points d'émission $EP_{pq}^{ij}$ émettent des ondes lumineuses accordées entre elles en angle et en phase pour générer ladite onde lumineuse résultante définie selon ladite direction du vecteur d'onde $\vec{k}_{uv}^{ij}$ contenu dans un domaine angulaire.

6. Dispositif de projection d'une image (10) selon l'une des revendications précédentes, dans lequel le dispositif comprend en outre, dans le plan (X,Y), au moins une autre surface d'émission $S^{xy}$ distincte de ladite surface d'émission S, ladite autre surface d'émission $S^{xy}$ étant discrétisée en zones d'émission élémentaires comprenant des points d'émission adaptés pour émettre une onde lumineuse selon une direction contenue dans un domaine angulaire déterminé selon un axe optique centré par rapport à un point $Pr^{xy}$ et dirigé vers ladite surface d'émission $S^{xy}$, ledit point $Pr^{xy}$ étant associé à la position de l'œil, après rotation de l'œil dans son orbite vers ladite surface d'émission $S^{xy}$.

7. Dispositif de projection d'une image (10) selon l'une des revendications précédentes, dans lequel le dispositif comprend en outre, dans le plan (X,Y), au moins une autre surface d'émission S identique à ladite surface d'émission S, ladite autre surface d'émission S étant discrétisée en zones d'émission élémentaires comprenant des points d'émission configurés pour émettre une onde lumineuse selon une direction contenue dans un domaine angulaire défini selon l'axe Z et centré par rapport à un point $Pt^{xy}$ associé à la translation de l'œil dans le plan (X,Y).

8. Dispositif de projection d'une image (10) selon l'une des revendications précédentes, dans lequel lesdites zones d'émission élémentaires $Z^{ij}$ ont une taille dans le plan (X,Y) comprise entre 200 $\mu$m et 800 $\mu$m.

9. Système optique portable d'affichage de données transparent comprenant un dispositif de projection d'une image (10) selon l'une des revendications précédentes, dans lequel ledit système est un système de lunettes ou un casque à réalité augmentée.

10. Procédé pour la fabrication du dispositif de projection d'une image (10) selon l'une des revendications 1 à 8, le procédé comprenant une phase de conception dudit dispositif (10) et une phase de fabrication matérielle dudit dispositif (10) ainsi conçu, **caractérisé en ce que** ladite phase de conception comprend les étapes consistant à :

- discrétiser (120) ladite surface d'émission S en $L_x \times L_y$ de zones d'émission élémentaires $Z^{ij}$, chaque zone d'émission élémentaire $Z^{ij}$ comprenant un sous-ensemble de $m_x^{ij} \times m_y^{ij}$ de points d'émission $EP_{pq}^{ij}$ ;

- répartir (140) ledit sous-ensemble de $m_x^{ij} \times m_y^{ij}$ de points d'émission $EP_{pq}^{ij}$ selon $n_x^{ij} \times n_y^{ij}$ distributions de points d'émission $EPD_{uv}^{ij}$ ;

- pour chaque zone d'émission élémentaire $Z^{ij}$, affecter (106) $n_x^{ij} \times n_y^{ij}$ distributions de points d'émission $EPD_{uv}^{ij}$ à $n_x^{ij} \times n_y^{ij}$ pixels de ladite image à projeter ;

- déterminer (180), pour chaque distribution de points d'émission $EPD_{uv}^{ij}$, la direction du vecteur d'onde $\vec{k}_{uv}^{ij}$ de l'onde lumineuse émise par les points d'émission $EP_{pq}^{ij}$, le vecteur d'onde $\vec{k}_{uv}^{ij}$ étant contenu dans un domaine angulaire défini à partir du nombre $L_x \times L_y$ de zones d'émission élémentaires $Z^{ij}$ discrétisant ladite surface d'émission S et de la position de ladite zone d'émission élémentaire $Z^{ij}$ sur ladite surface d'émission S.

**Fig. 1a**

**Fig. 1b**

**Fig. 2**

**Fig. 3**

**Fig. 4**

**Fig. 5**

**Fig. 6**

**Fig. 7a**

**Fig. 7b**

**Fig. 8a**

**Fig. 8b**

**Fig. 9**

| Discrétisation de la surface d'émission S en zones d'émission élémentaires $Z^{ij}$ | 120 |
| Répartition du sous-ensemble de points d'émission $EP_{pq}^{ij}$ en distributions de points d'émission $EPD_{uv}^{ij}$ | 140 |
| Attribution des distributions de points d'émission $EPD_{uv}^{ij}$ aux pixels de l'image à projeter | 160 |
| Détermination pour chaque distribution de points d'émission $EPD_{uv}^{ij}$ de la direction du vecteur d'onde $\vec{k}_{uv}^{ij}$ | 180 |

**Fig. 10**

| | |
|---|---|
| Détermination de la résolution $(N_x \times N_y)$ de l'image à projeter | 102 |
| Détermination de la taille $(\theta_x, \theta_y)$ du champ de vision | 104 |
| Détermination de la distance $Z_{er}$ du dégagement oculaire | 106 |
| Calcul de la taille $(D_{emx}, D_{emy})$ de la surface d'émission S | 108 |
| Détermination de la taille $(d_{emx}^{ij}, d_{emy}^{ij})$ des zones d'émission élémentaires $Z^{ij}$ | 110 |
| Calcul des nombres $(L_x \times L_y)$ de zones d'émission élémentaires $Z^{ij}$ | 112 |
| Détermination des largeurs $e_x$ et $g_y$ et des configurations des guides d'ondes $g_p$ et des électrodes $e_q$ | 114 |
| Calcul des nombres $(m_x^{ij} \times m_y^{ij})$ de guides d'ondes $g_p$ et d'électrodes $e_q$ par zones d'émission élémentaires $Z^{ij}$ | 116 |
| Calcul du nombre $n_{em/EPD}$ de points d'émission par distribution de points d'émission | 118 |

**Fig. 11a**

**Pour la distribution de points d'émission** $EPD_{uv}^{ij}$

Tirages aléatoires et/ou pseudo-aléatoires
du nombre de guides d'ondes $g_p$ et du nombre d'électrodes $e_q$
pour obtenir le nombre $n_{em/EPD}$ de points d'émission

/ 122

Tirages aléatoires et/ou pseudo-aléatoires
du nombre de guides d'ondes $g_p$ et du nombre d'électrodes $e_q$
parmi les $\left(m_x^{ij} \times m_y^{ij}\right)$ de guides d'ondes $g_p$ et d'électrodes $e_q$
de la zone d'émission élémentaires $Z^{ij}$

/ 124

## Fig. 11b

**Fig. 12**

**Fig. 13**

Initialisation d'une matrice de calcul
de $nb_{cal_x} \times nb_{cal_y}$ points associés à la surface d'émission S
／ 210

↓

Détermination et implémentation dans la matrice de calcul
d'une courbe géométrique initiale f0(X,Y)
／ 230

↓

Calculer une cartographie de distance
à partir de la méthode de type *Fast-Marching* appliquée à la
courbe géométrique initiale f0(X,Y) dans la matrice de calcul
／ 250

↓

Détermination de la distance minimum entre deux lignes $d_{min}$
et des multiples $c$
／ 270

↓

Détermination de l'ensemble des isolignes à partir de la
cartographie de distance et des valeurs de distance $c \times d_{min}$
／ 290

**Fig. 14**

**Fig. 15**

**Fig. 16a**

**Fig. 16b**

**Fig. 17a**

**Fig. 17b**

**Fig. 18**

Europäisches
Patentamt

European
Patent Office

Office européen
des brevets

## RAPPORT DE RECHERCHE EUROPEENNE

Numéro de la demande

EP 24 16 8574

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 4 089 470 A1 (COMMISSARIAT ENERGIE ATOMIQUE [FR]) 16 novembre 2022 (2022-11-16) * alinéas [0001], [0002], [0031], [0035] - [0044], [0057] - [0075], [0081] - [0086], [0103]; figures 1,2-4 * | 1-10 | INV. F21V8/00 G02B5/18 G02F1/29 G02B27/00 ADD. G02B27/01 |
| | ----- | | |
| A | MILLARD KYLLIAN ET AL: "Convergence of mathematical and physical optical designs for the development of random photonic integrated circuits for an unconventional AR display concept", OPTICAL ARCHITECTURES FOR DISPLAYS AND SENSING IN AUGMENTED, VIRTUAL, AND MIXED REALITY (AR, VR, MR) IV, 16 mars 2023 (2023-03-16), page 142, XP093096000, DOI: 10.1117/12.2669115 ISBN: 978-1-5106-6004-5 * page 6; figure 4 * | 1-10 | |
| | ----- | | DOMAINES TECHNIQUES RECHERCHES (IPC) |
| A | MILLARD KYLLIAN ET AL: "Multilayer photonic-integrated circuit design for dense random waveguide distribution addressing, application to near-eye display", OPTICAL ARCHITECTURES FOR DISPLAYS AND SENSING IN AUGMENTED, VIRTUAL, AND MIXED REALITY (AR, VR, MR) IV, 16 mars 2023 (2023-03-16), page 137, XP093096001, DOI: 10.1117/12.2649858 ISBN: 978-1-5106-6004-5 * le document en entier * | 1-10 | G02B G02F |
| | ----- | | |
| | -/-- | | |

Le présent rapport a été établi pour toutes les revendications

| Lieu de la recherche | Date d'achèvement de la recherche | Examinateur |
|---|---|---|
| La Haye | 26 juillet 2024 | Kapsalis, Alexandros |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    & : membre de la même famille, document correspondant

EPO FORM 1503 03.82 (P04C02)

page 1 de 3

Europäisches
Patentamt

European
Patent Office

Office européen
des brevets

# RAPPORT DE RECHERCHE EUROPEENNE

Numéro de la demande

EP 24 16 8574

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | RAINOUARD FABIAN ET AL: "Optimal dense and random addressing design of emissive points in a retinal projection device", PROCEEDINGS OF THE SPIE, SPIE, US, vol. 12138, 17 mai 2022 (2022-05-17), pages 121380R-121380R, XP060158344, ISSN: 0277-786X, DOI: 10.1117/12.2620243 ISBN: 978-1-5106-5738-0 * le document en entier * ----- | 1-10 | |
| A | MARTINEZ CHRISTOPHE ET AL: "See-through holographic retinal projection display concept", OPTICA, [Online] vol. 5, no. 10, 20 octobre 2018 (2018-10-20), page 1200, XP055942106, US ISSN: 2334-2536, DOI: 10.1364/OPTICA.5.001200 Extrait de l'Internet: URL:http://dx.doi.org/10.1364/OPTICA.5.001 200> ----- | 1-10 | DOMAINES TECHNIQUES RECHERCHES (IPC) |
| A | US 9 632 317 B2 (COMMISSARIAT L ENERGIE ATOMIQUE ET AUX ENERGIES ALTERNATIVES [FR]) 25 avril 2017 (2017-04-25) ----- | 1-10 | |
| A | US 9 341 846 B2 (POPOVICH MILAN MOMCILO [GB]; WALDERN JONATHAN DAVID [US] ET AL.) 17 mai 2016 (2016-05-17) ----- -/-- | 1-10 | |

Le présent rapport a été établi pour toutes les revendications

| Lieu de la recherche | Date d'achèvement de la recherche | Examinateur |
|---|---|---|
| La Haye | 26 juillet 2024 | Kapsalis, Alexandros |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 24 16 8574

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | RAINOUARD FABIAN ET AL: "Improved mathematical model for a dense network of waveguide and electrode design", PROCEEDINGS OF THE SPIE, SPIE, US, vol. 11689, 5 mars 2021 (2021-03-05), pages 116891N-116891N, XP060140272, ISSN: 0277-786X, DOI: 10.1117/12.2578309 ISBN: 978-1-5106-5738-0 | 1-10 | |

- - - - -

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 26 juillet 2024 | Kapsalis, Alexandros |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 3 de 3

**ANNEXE AU RAPPORT DE RECHERCHE EUROPEENNE
RELATIF A LA DEMANDE DE BREVET EUROPEEN NO.**

EP 24 16 8574

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-07-2024

| Document brevet cité au rapport de recherche | | Date de publication | Membre(s) de la famille de brevet(s) | | Date de publication |
|---|---|---|---|---|---|
| EP 4089470 | A1 | 16-11-2022 | CN | 115343794 A | 15-11-2022 |
| | | | EP | 4089470 A1 | 16-11-2022 |
| | | | FR | 3122929 A1 | 18-11-2022 |
| | | | US | 2022381968 A1 | 01-12-2022 |
| US 9632317 | B2 | 25-04-2017 | EP | 2960715 A1 | 30-12-2015 |
| | | | FR | 3022642 A1 | 25-12-2015 |
| | | | US | 2015370073 A1 | 24-12-2015 |
| US 9341846 | B2 | 17-05-2016 | CN | 103562802 A | 05-02-2014 |
| | | | CN | 106125308 A | 16-11-2016 |
| | | | EP | 2842003 A1 | 04-03-2015 |
| | | | JP | 6238965 B2 | 29-11-2017 |
| | | | JP | 2015523586 A | 13-08-2015 |
| | | | US | 2014104665 A1 | 17-04-2014 |
| | | | US | 2016291328 A1 | 06-10-2016 |
| | | | US | 2020241304 A1 | 30-07-2020 |
| | | | US | 2022317356 A1 | 06-10-2022 |
| | | | US | 2024151890 A1 | 09-05-2024 |
| | | | WO | 2013163347 A1 | 31-10-2013 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- FR 3122929 A1

- FR 3022642 A1

**Littérature non-brevet citée dans la description**

- Level Set Methods and Fast Marching Methods Evolving Interfaces in Computational Geometry. **JAMES SETHIAN.** Fluid Mechanics, Computer Vision and Materials Science. Cambridge University Press, 1999